# EUROPEAN PATENT SPECIFICATION

(11) **EP 3 320 531 B1**
(45) Date of publication and mention of the grant of the patent: **27.01.2021**
(21) Application number: 16848159.6
(22) Date of filing: 23.09.2016
(51) Int. Cl.: H04W 4/02, H04W 4/029, H04W 4/40, G08G 1/01, G06Q 10/04, G06Q 10/06, G06Q 10/08, G06Q 50/30, G07C 5/00, G08G 1/00, G01C 21/30, G06Q 50/28, H04W 4/42, H04W 4/021

(54) **SYSTEM AND METHOD FOR DETERMINING THE VEHICLE LOAD STATUS**
SYSTEM UND VERFAHREN ZUR BESTIMMUNG DES FAHRZEUGLADESTATUS
SYSTÈME ET PROCÉDÉ DE DÉTERMINATION DE L'ÉTAT DE CHARGE D'UN VÉHICULE

(30) Priority: 24.09.2015 CN 201510615454
(43) Date of publication of application: 16.05.2018
(73) Proprietor: BEIJING DIDI INFINITY TECHNOLOGY AND DEVELOPMENT CO., LTD., Beijing 100193 (CN)
(72) Inventor: ZHUO, Chengxiang, Beijing 100193 (CN)
(74) Representative: Barker Brettell LLP
(86) International application number: PCT/CN2016/099898
(87) International publication number: WO 2017/050278

(56) References cited:
- WO-A1-2005/052884
- WO-A1-2012/143300
- CN-A- 103 035 117
- CN-A- 104 794 889
- CN-A- 104 794 890
- CN-A- 105 160 880
- JP-A- H11 283 186
- US-A1- 2011 137 699

## Description

### CROSS-REFERENCE TO RELATED APPLICATIONS

This application claims priority of Chinese Application No. 201510615454.4 filed on September 24, 2015.

### TECHNICAL FIELD

This application relates generally to a system and method for operating an on-demand service, and in particular, a system and method for determining vehicle load status.

### BACKGROUND

On-demand services become more and more popular. For a transportation service, a user may request a transport service in the form of an order through an application installed on user equipment, such as a smart phone terminal, then a server may broadcast the order to drivers. In many cases, drivers are unavailable to accept the order, when the server broadcasts the order to drivers whose vehicles are in an unavailable state. This may impact the quality of the transport service.

**We** are aware of the following documents:
- United States patent application publication US2011/137699, which discloses a method and system for cab management, which allows for assignment of transport services outside the area of one operator using other operators;
- PCT patent application publication WO2012/143300, which discloses a vehicle request management system having a server arranged to communicate with a plurality of vehicle requesting devices and a plurality of vehicles; and
- Chinese patent application publication CN104794889, which discloses a method and apparatus for pushing order forms based upon a historical speed of historical order forms.

### SUMMARY

In one aspect of the present disclosure, a system is provided in accordance with claim 1. Optional features are recited in the dependent claims.

In another aspect of the present disclosure, a method is provided in accordance with claim 7. Optional features are recited in the dependent claims.

In another aspect of the present disclosure, a computer-readable storage medium is provided in accordance with claim 13. Optional features are recited in the dependent claims.

Additional features will be set forth in part in the description which follows, and in part will become apparent to those skilled in the art upon examination of the following and the accompanying drawings or may be learned by production or operation of the examples. The features of the present disclosure may be realized and attained by practice or use of various aspects of the methodologies, instrumentalities and combinations set forth in the detailed examples discussed below.

### BRIEF DESCRIPTION OF THE DRAWINGS

The present disclosure is further described in terms of exemplary embodiments. These exemplary embodiments are described in detail with reference to the drawings. These embodiments are non-limiting exemplary embodiments, in which like reference numerals represent similar structures throughout the several views of the drawings, and wherein:
FIG. 1 is a block diagram of an exemplary system for on-demand service according to some embodiments of the present disclosure;
FIG. 2 is a block diagram of an exemplary server in the system illustrated in FIG.1 according to some embodiments of the present disclosure;
FIG. 3 is a block diagram of an exemplary network interface according to some embodiments of the present disclosure;
FIG. 4 is a block diagram of an exemplary processor according to some embodiments of the present disclosure;
FIG. 5 is a block diagram of an exemplary order obtaining module according to some embodiments of the present disclosure;
FIG. 6 is a block diagram of an exemplary location determination module according to some embodiments of the present disclosure;
FIG. 7 is a block diagram of an exemplary computing device according to some embodiments of the present disclosure;
FIG. 8 is a flowchart of an exemplary process for determining a load status of a vehicle according to some embodiments of the present disclosure;
FIG. 9 is a flowchart of an exemplary process for determining a first prior order according to some embodiments of the present disclosure;
FIG. 10-A is a flowchart of an exemplary process for determining a state of a vehicle according to some embodiments of the present disclosure;
FIG. 10-B illustrates exemplary traveling paths of a terminal and a prior user equipment according to some embodiments of the present disclosure;
FIG. 11 is a flowchart of an exemplary process for determining a load status of a vehicle based on a reference location of a terminal and a reference location of a UE according to some embodiments of the present disclosure;
FIG. 12 is a flowchart of an exemplary process for determining a load status of a vehicle based on a neural network model according to some embodiments of the present disclosure;
FIG. 13 is a flowchart of an exemplary process for determining a neural network model according to some embodiments of the present disclosure; and
FIG. 14 illustrates exemplary features for a neural network according to some embodiments of the present disclosure.

### DETAILED DESCRIPTION

The following description is presented to enable any person skilled in the art to make and use the present disclosure, and is provided in the context of a particular application and its requirements. Various modifications to the disclosed embodiments will be readily apparent to those skilled in the art, and the general principles defined herein may be applied to other embodiments and applications without departing from the scope of the present disclosure. Thus, the present disclosure is not limited to the embodiments shown, but is to be accorded the widest scope consistent with the claims.

It will be understood that the term "system," "device," "unit," and/or "module" used herein are one method to distinguish different components, elements, parts, section or assembly of different level in ascending order. However, the terms may be displaced by other expression if they may achieve the same purpose.

It will be understood that when a device, unit, or module is referred to as being "on," "connected to" or "coupled to" another device, unit, or module, it may be directly on, connected or coupled to, or communicate with the other device, unit, or module, or an intervening device, unit, or module may be present, unless the context clearly indicates otherwise. As used herein, the term "and/or" includes any and all combinations of one or more of the associated listed items.

The terminology used herein is for the purpose of describing particular example embodiments only and is not intended to be limiting. As used herein, the singular forms "a," "an," and "the" may be intended to include the plural forms as well, unless the context clearly indicates otherwise. It will be further understood that the terms "comprises," "comprising," "includes," and/or "including" when used in this specification, specify the presence of stated features, integers, steps, operations, elements, and/or components, but do not preclude the presence or addition of one or more other features, integers, steps, operations, elements, components, and/or groups thereof.

These and other features, and characteristics of the present disclosure, as well as the methods of operation and functions of the related elements of structure and the combination of parts and economies of manufacture, may become more apparent upon consideration of the following description with reference to the accompanying drawing(s), all of which form a part of this specification. It is to be expressly understood, however, that the drawing(s) are for the purpose of illustration and description only and are not intended to limit the scope of the present disclosure. It is understood that the drawings are not to scale.

Moreover, while the system and method in the present disclosure is described primarily in regard to determine a load status of a vehicle, it should also be understood that this is only one exemplary embodiment. The system or method of the present disclosure may be applied to any other kind of on-demand service. For example, the system or method of the present disclosure may be applied to transportation systems of different environments including land, ocean, aerospace, or the like, or any combination thereof. The vehicle of the transportation systems may include a taxi, a private car, a hitch, a bus, a train, a bullet train, a high speed rail, a subway, a vessel, an aircraft, a spaceship, a hot-air balloon, a driverless vehicle, or the like, or any combination thereof. The transportation system may also include any transportation system for management and/or distribution, for example, a system for sending and/or receiving an express. The application of the system or method of the present disclosure may include a webpage, a plug-in of a browser, a client terminal, a custom system, an internal analysis system, an artificial intelligence robot, or the like, or any combination thereof.

The term "user," "passenger," "requester," "service requester," and "customer" in the present disclosure are used interchangeably to refer to an individual, an entity or a tool that may request or order a service. Also, the term "driver," "provider," "service provider," and "supplier" in the present disclosure are used interchangeably to refer to an individual, an entity or a tool that may provide a service or facilitate the providing of the service. The term "user equipment" in the present disclosure may refer to a tool that may be used to request a service, order a service, or facilitate the providing of the service. The term "terminal" in the present disclosure may refer to a tool that may be used by a driver to provide a service. In the present disclosure, "user" and "user equipment (UE)" may be used interchangeably.

The term "service request" and "order" in the present disclosure are used interchangeably to refer to a request that may be initiated by a user, a passenger, a requester, a service requester, a customer, a driver, a provider, a service provider, a supplier, or the like, or any combination thereof. The service request may be accepted by any one of a passenger, a requester, a service requester, a customer, a driver, a provider, a service provider, or a supplier. The service request may be chargeable or free.

The positioning technology used in the present disclosure may be based on a global positioning system (GPS), a global navigation satellite system (GLONASS), a compass navigation system (COMPASS), a Galileo positioning system, a quasi-zenith satellite system (QZSS), a wireless fidelity (WiFi) positioning technology, or the like, or any combination thereof. One or more of the above positioning systems may be used interchangeably in the present disclosure.

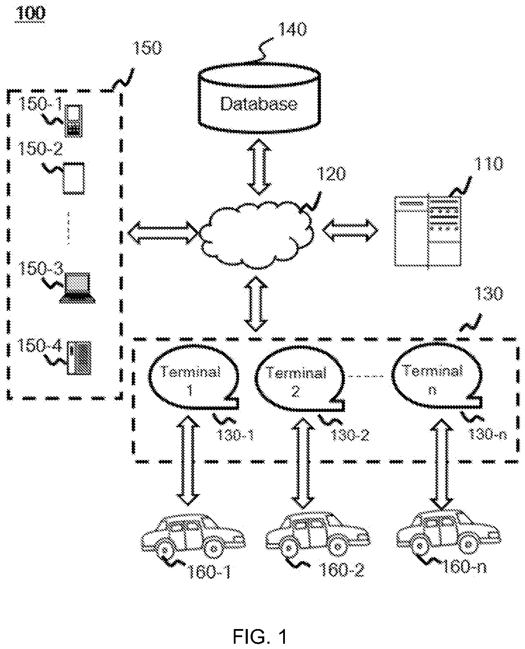

FIG. 1 is a block diagram of an exemplary system 100 for on-demand service according to some embodiments of the present disclosure. System 100 may include a server 110, a network 120, one or more terminals 130, a database 140 and user equipment (UE) 150.

Server 110 may process information and/or data relating to a service request. For example, server 110 may determine a load status of a vehicle. A vehicle may be in an available state or in an unavailable state. The available state may refer to a state that the driver associated with the vehicle may accept a current order (i.e., the vehicle may accept the current order). The unavailable state may refer to a state that the driver associated with the vehicle may not accept a current order or any current order (i.e., the vehicle may not accept the current order). In some embodiments, there may be a passenger in a vehicle associated with the state, so that the driver may not accept the current order. In some embodiments, the passenger may request a service through a website or an application in a computing device, such as a smartphone, a personal digital assistance (PDA), a tablet computer. In some embodiments, the passenger may request a service by hailing or calling a telephone system.

In some embodiments, server 110 may be a single server or a server group. The server group may be centralized or distributed. In some embodiments, server 110 may be local or remote. Server 110 may communicate with terminal 130 or user equipment 150. The communication may be a wired communication or a wireless communication. For example, server 110 may access information and/or data stored in terminal 130, database 140, or user equipment 150 via network 120. As another example, server 110 may be directly connected to terminal 130, database 140, or user equipment 150 to access information and/or data stored in. In some embodiments, server 110 may be implemented on a cloud platform. Merely by way of example, the cloud platform may include a private cloud, a public cloud, a hybrid cloud, a community cloud, a distributed cloud, an inter-cloud, a multi-cloud, or the like, or any combination thereof.

Network 120 may provide channel for exchanging information and/or data. In some embodiments, one or more components in system 100 (e.g., server 110, terminal 130, database 140, or user equipment 150) may transmit information and/or data to other component(s) in system 100 via network 120. In some embodiments, network 120 may be any type of wired network or wireless network. Merely by way of example, network 120 may include a cable network, a wireline network, an optical fiber network, a telecommunications network, an intranet, an Internet, a local area network (LAN), a wide area network (WAN), a wireless local area network (WLAN), a metropolitan area network (MAN), a wide area network (WAN), a Public Telephone Switched Network (PSTN), a Bluetooth network, a ZigBee network, a near field communication (NFC) network, or the like, or any combination thereof.

In some embodiments, user equipment 150 may be a computing device including a mobile device 150-1, a tablet computer 150-2, a laptop computer 150-3, a built-in device 150-4, or the like, or any combination thereof. In some embodiments, mobile device 150-1 may include a wearable device, a smart mobile device, a virtual reality device, an augmented reality device, or the like, or any combination thereof. In some embodiments, the wearable device may include a smart bracelet, a smart footgear, a smart glass, a smart helmet, a smart watch, a smart clothing, a smart backpack, a smart accessory, or the like, or any combination thereof. In some embodiments, the smart mobile device may include a smartphone, a personal digital assistance (PDA), a gaming device, a navigation device, a point of sale (POS) device, or the like, or any combination thereof. In some embodiments, the virtual reality device and/or the augmented reality device may include a virtual reality helmet, a virtual reality glass, a virtual reality patch, an augmented reality helmet, an augmented reality glass, an augmented reality patch, or the like, or any combination thereof. For example, the virtual reality device and/or the augmented reality device may include a Google Glass, an Oculus Rift, a Hololens, a Gear VR, etc. In some embodiments, built-in device 150-4 may include an onboard computer, an onboard television, etc. In some embodiments, user equipment 150 may be a device with positioning technology for locating the position of a passenger and/or user equipment associated with a passenger.

In some embodiments, terminal 130 may be a mobile terminal or may be a terminal that is configured to be installed on a platform, such as a vehicle. For example, terminal 130 may include similar type of device as user equipment 150 or an electronic device embedded in a vehicle, such as a radio, GPS, or other type of communication devices embedded in the vehicle. In some embodiments, terminal 130 may be a device with positioning technology for locating the position of a driver, a vehicle associated with a driver, and/or terminal 130 associated with a driver. Terminal 130 may include one or more terminals 130-1, 130-2, ..., 130-n, which respectively correspond to same or different types of vehicles for hire. For example, a terminal may correspond to a taxi registered in a taxi company, a personal taxicab, a registered private car, or a vehicle with a registered driver. Various types of terminals may be registered with the system 100 so that they may communicate with the system 100 to exchange information.

Database 140 may be connected to network 120 to communicate with one or more components in system 100 (e.g., server 110, terminal 130, or user equipment 150, etc.). One or more components in system 100 may access the data or instructions stored in database 140 via network 120. In some embodiments, database 140 may be directly connected to or communicate with one or more components in system 100 (e.g., server 110, terminal 130, or user equipment 150, etc.). In some embodiments, database 140 may be part of server 110.

In some embodiments, one or more components in system 100 (e.g., server 110, terminal 130, or user equipment 150, etc.) may have an access permission to access database 140. In some embodiments, one or more components in system 100 may read and/or modify relevant information of the passenger, driver, and/or the public when one or more conditions are met. For example, server 110 may read and/or modify one or more users' information after a service has been provided for the users. As another example, terminal 130 may access relevant information of a passenger when receiving a service request from user equipment 130, but terminal 130 may not modify the relevant information of the passenger.

In some embodiments, information exchanging of one or more components in system 100 may be achieved by way of requesting a service. The object of the service request may be any product. In some embodiments, the product may be a tangible product, or an immaterial product. The tangible product may include food, medicine, commodity, chemical product, electrical appliance, clothing, car, housing, luxury, or the like, or any combination thereof. The immaterial product may include a servicing product, a financial product, a knowledge product, an internet product, or the like, or any combination thereof. The internet product may include an individual host product, a web product, a mobile internet product, a commercial host product, an embedded product, or the like, or any combination thereof. The mobile internet product may be used in a software of a terminal, a program, a system, or the like, or any combination thereof. The terminal may include a tablet computer, a laptop computer, a mobile phone, a personal digital assistance (PDA), an electronic watch, a point of sale (POS) device, an onboard computer, an onboard television, a wearable device, or the like, or any combination thereof. For example, the product may be any software and/or application used in the computer or mobile phone. The software and/or application may relate to socializing, shopping, transporting, entertainment, learning, investment, or the like, or any combination thereof. In some embodiments, the software and/or application relating to transporting may include a traveling software and/or application, a vehicle state determination software and/or application, etc. In the vehicle state determination software and/or application, the vehicle may include a horse, a carriage, a rickshaw (e.g., a wheelbarrow, a bike, a tricycle, etc.), a car (e.g., a taxi, a bus, a private car, etc.), a train, a subway, a vessel, an aircraft (e.g., an airplane, a helicopter, a space shuttle, a rocket, a hot-air balloon, etc.), or the like, or any combination thereof.

It should be noted that transportation system described below is merely provided for illustrating an example of the on-demand system, and not intended to limit the scope of the present disclosure.

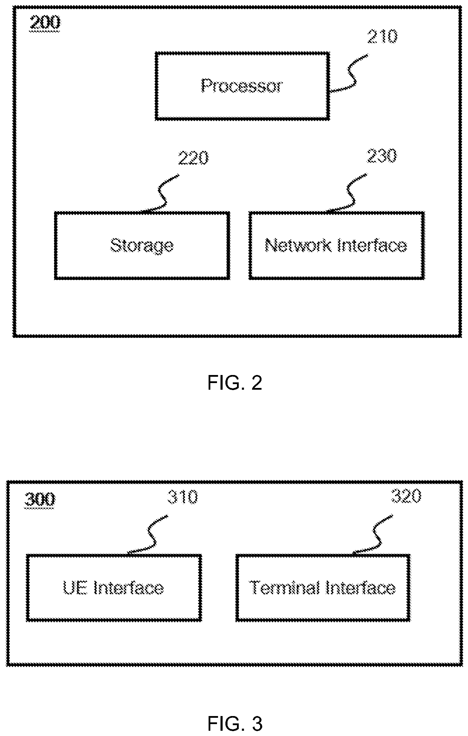

FIG. 2 is a block diagram of an exemplary server 200 in the system illustrated in FIG.1 according to some embodiments of the present disclosure. Server 200 may include a processor 210, a storage 220 and a network interface 230.

Processor 210 may process received information and/or data. The information and/or data may be sent from terminal 130, user equipment 150, database 140, or other modules or units in the system. In some embodiments, the information and/or data may include a service request from user equipment 150. In some embodiments, the information and/or data may include a location data of user equipment 150 or terminal 130. In some embodiments, the information and/or data may include map data from database 140 or network 120. The map data may include locations of man-made objects and natural objects. The man-made objects may include streets, bridges, buildings, or the like, or any combination thereof. The natural objects may include waters, mountains, forests, or the like, or any combination thereof. The map may encompass the plurality of locations of terminal 130 and/or user equipment 150. In some embodiments, processor 210 may determine whether a vehicle may be available. In some embodiments, processor 210 may include one or more processors (e.g., single-core processor(s) or multi-core processor(s)). Merely by way of example, processor 210 may include a central processing unit (CPU), an application-specific integrated circuit (ASIC), an application-specific instruction-set processor (ASIP), a graphics processing unit (GPU), a physics processing unit (PPU), a digital signal processor (DSP), a field programmable gate array (FPGA), a programmable logic device (PLD), a controller, a microcontroller unit, a reduced instruction-set computer (RISC), a microprocessor, or the like, or any combination thereof.

Storage 220 may store data and/or instructions that may perform one or more functions described in the present disclosure. For example, storage 220 may store instructions executed by processor 210 to determine or predict a load status of a vehicle. In some embodiments, storage 220 may include a mass storage, a removable storage, a volatile read-and-write memory, a read-only memory (ROM), or the like, or any combination thereof. Exemplary mass storage may include a magnetic disk, an optical disk, a solid-state drives, etc. Exemplary removable storage may include a flash drive, a floppy disk, an optical disk, a memory card, a zip disk, a magnetic tape, etc. Exemplary volatile read-and-write memory may include a random access memory (RAM). Exemplary RAM may include a dynamic RAM (DRAM), a double date rate synchronous dynamic RAM (DDR SDRAM), a static RAM (SRAM), a thyristor RAM (T-RAM), and a zero-capacitor RAM (Z-RAM), etc. Exemplary ROM may include a mask ROM (MROM), a programmable ROM (PROM), an erasable programmable ROM (PEROM), an electrically erasable programmable ROM (EEPROM), a compact disk ROM (CD-ROM), and a digital versatile disk ROM, etc.

Network interface 230 may be interface with network 120 and/or one or more device in system 100 (e.g., server 110, terminal 130, user equipment 150, and database 140). In some embodiments, network interface 230 may include a user equipment interface 310 (also referred to herein as "UE interface") and a terminal interface 320.

User equipment interface 310 may transmit information between server 110 and user equipment 150. For example, a service request from a user equipment 150 may be transmitted through user equipment interface 310 to server 110. Server 110 may transmit a response to the service request to user equipment 150 through user equipment interface 310. As another example, server 110 may obtain a location of user equipment 150 through user equipment interface 310.

Terminal interface 320 may transmit information between server 110 and terminal 130. For example, server 110 may transmit an order to terminal 130 through terminal interface 320. As another example, server 110 may obtain a location of terminal 130 through terminal interface 320. In some embodiments, terminal interface 320 may transmit a response from terminal to an order (e.g., accepting the order or rejecting the order) through terminal interface 320 to server 110.

In some embodiments, network interface 230 (e.g., UE interface 310, terminal interface 320) may be any type of wired network interface or wireless network interface. Merely by way of example, network interface 230 (e.g., UE interface 310, terminal interface 320) may include a cable network interface, a wireline network interface, an optical fiber network interface, a telecommunications network interface, an intranet interface, an Internet interface, a local area network (LAN) interface, a wide area network (WAN) interface, a wireless local area network (WLAN) interface, a metropolitan area network (MAN) interface, a wide area network (WAN) interface, a Public Telephone Switched Network (PSTN) interface, a Bluetooth network interface, a ZigBee network interface, a near field communication (NFC) network interface, or the like, or any combination thereof.

In some embodiments, network interface 230 (e.g., UE interface 310, terminal interface 320) may be implemented according to programming and/or computer language(s). Network interface 230 (e.g., UE interface 310, terminal interface 320) may include circuitry for coupling server 200 to one or more networks, and is constructed for use with one or more communication protocols and technologies including, global system for mobile communications (GSM), code-division multiple access (CDMA), time-division multiple access (TDMA), general packet radio service (GPRS), enhanced data rate for GSM evolution (EDGE), wideband code division multiple access (WCDMA), high speed downlink packet access (HSDPA), long term evolution (LTE), user datagram protocol (UDP), transmission control protocol/Internet protocol (TCP/IP), short message service (SMS), wireless application protocol (WAP), ultra wide band (UWB), IEEE 802.16 worldwide interoperability for microwave access (WiMAX), session initiated protocol/real-time transport protocol (SIP/RTP), or any of a variety of other wireless communication protocols.

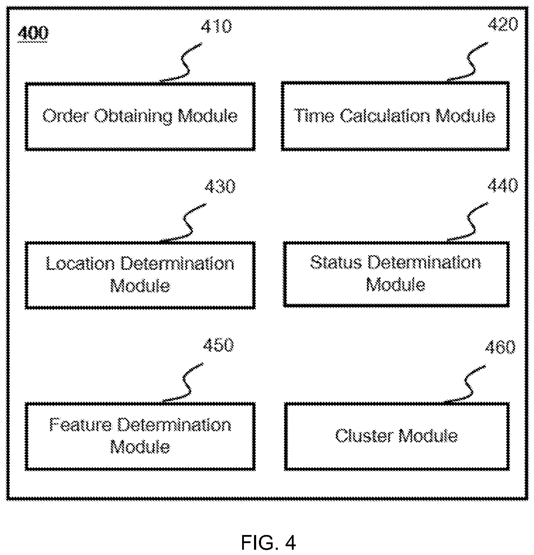

FIG. 4 is a block diagram of an exemplary processor 400 of server 110 according to some embodiments of the present disclosure. Processor 400 may include an order obtaining module 410, a time calculation Module 420, a location determination module 430, a status determination module 440, a feature determination module 450, and/or a cluster module 460.

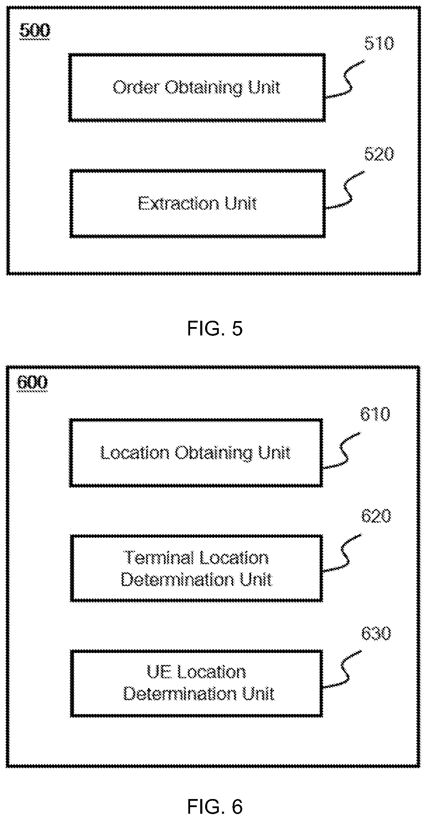

Order obtaining module 410 may obtain an order. The order may be obtained from database 140, storage 220, or memory 720 of a terminal 130 or a user equipment 150. In some embodiments, the obtained order may have been carried out by a driver associated with a terminal. In some embodiments, the obtained order may have not been carried out by a driver associated with a terminal. FIG. 5 shows an exemplary order obtaining module numbered 500 according to some embodiments of the present disclosure. The order obtaining module 500 may include an order obtaining unit 510 and an extraction unit 520. Order obtaining unit 510 may acquire an order. Extraction unit 520 may extract information associated with the order acquired by order obtaining unit 510. The information of the order may include an initial position, a destination, time for picking up designated by a passenger associated with the order, time when the driver actually picks up the passenger, a plurality of middle locations from the initial position to the destination, a tip, or the like, or any combination thereof.

Time calculation module 420 may estimate an end time to complete a transaction associated with an order. The estimated end time may be transferred to status determination module 440 to determine a load status of a vehicle associated with the order.

Location determination module 430 may determine locations of a computing device (e.g., terminal 130 or user equipment 150). FIG. 6 shows an exemplary location determination module 600 according to some embodiments of the present disclosure. The location determination module 600 may include a location obtaining unit 610, a terminal location determination unit 620, and/or a user equipment location unit 630. Location obtaining unit 610 may acquire location data transferred from the GPS of a computing device (e.g., terminal 130 or user equipment 150). Location obtaining unit 610 may transfer the location data to terminal determination unit 620 or a user equipment location determination unit 630 to determine the location of terminal 130 or user equipment 150. In some embodiments, location determination module 600 may acquire a plurality of locations of a computing device within a time period. Terminal location determination unit 620 and/or user equipment location unit 630 may determine a centroid of the plurality of locations of the computing device within a time period.

Location determination module 430 may transfer the plurality of locations and/or a plurality of centroid to cluster module 460 to determine a road section where the terminal may pass through.

The determined locations of a computing device (e.g., mobile terminal 130 or user equipment 150) may be transferred to feature determination module 450. Feature determination module 450 may determine some features of terminal 130 based on the locations of the terminal and a map data of a geographical area where a vehicle associated with the terminal 130 is. In some embodiments, feature determination module 450 may transfer the determined features to cluster module 460 to determine clusters of terminals based on features of the terminals. In some embodiments, cluster module 460 may determine clusters of terminals based on the latitude and longitude of the locations of terminals. In some embodiments, feature determination module 450 may transfer the determined features to status determination module 440 to determine the load status of a vehicle associated with the terminal. When a vehicle is determined to be available to accept an order, system may broadcast an order to the terminal associated with the vehicle. When a vehicle is determined to be unavailable to accept an order, system may not broadcast an order to the terminal associated with the vehicle.

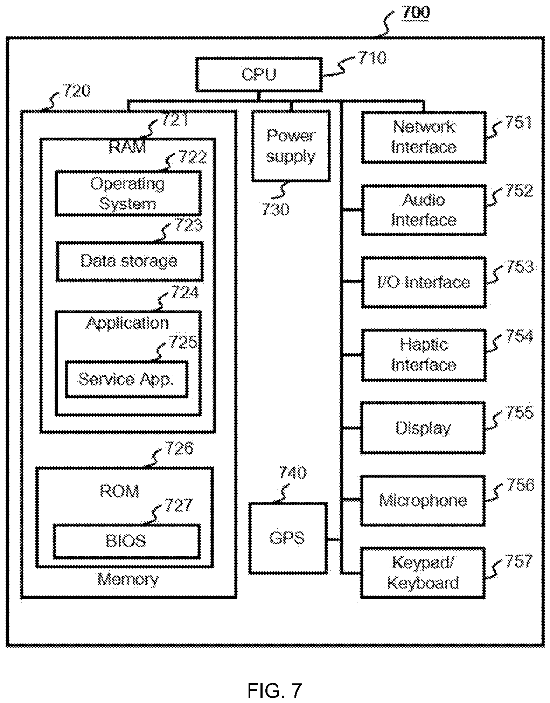

FIG. 7 shows an example of a schematic diagram illustrating a computing device 700 (e.g., terminal 130 or user equipment 150). Computing device 700 may include a processing unit (also referred to herein as CPU) 710, a memory 720, a power supply 730, a global positioning system (GPS) module 740. CPU 710 may process information from other units of computing device 700 or from other modules or units in system 100. For example, CPU 710 may control memory 720 or data storage 723 to store information. Memory 720 may include a random access memory (RAM) 721 and a read-only memory (ROM) 726. RAM 721 may store some information including an operating system (OS) 722, one or more application programs 724 or data that may be quickly reached and may be stored in data storage 723. Operating system may include iOS, Android, Windows Phone, or the like. For a transportation system, application 724 may include one or more service application 725, such as a transportation service application program. Application program 724 may be implemented by CPU 710. ROM 726 may include a basic input/output system (BIOS) 727. Power supply 730 may supply electric energy to computing device 700. Global positioning system (GPS) module 740 may provide a location of computing device 700.

In some embodiments, computing device 700 may include a network interface 751. Network interface 751 may exchange information between computing device 700 and network. For example, an order from a user equipment 150 may be transfer to server 110 through network interface 751 via network 120. As another example, terminal 130 may accept an order send from server 110 via network 120 through network interface 751. A location of user equipment 150 or terminal 130 may be transfer to server 110 through network interface 751.

In some embodiments, computing device 700 may include an audio interface 752. Audio interface 752 may take various audio inputs and convert them into digital data. In some embodiments, computing device 700 may include an input/output interface (I/O interface) 753. I/O interface 753 may transfer information between internal storage of computing device 700, e.g., memory 720, and external I/O device, e.g., a mouse, a keyboard, a monitor, a printer, or the like. In some embodiments, computing device 700 may include a haptic interface 754. Haptic interface 754 may take inputs obtained through sensations or movements and convert them into digital data for processing by computing device 700.

In some embodiments, computing devices 700 may include a display 755. In some embodiments, computing devices 700 may include a microphone 756. In some embodiments, computing devices 700 may include a keypad or keyboard 757.

In some embodiments, when server 110 receive a current order from a user equipment in a target location. The server may broadcast the current order to a plurality of terminals associated with a plurality of vehicles. In some embodiments, the server may broadcast the current order to terminals which may be in a range from the target location of the user equipment. The range may be predetermined. The range may include any suitable value, including, e.g., from 0 to 50 kilometers. In some embodiments, the range may include any suitable value, within range from 0 to 10 kilometers, 10.1 kilometers to 20 kilometers, 20.1 kilometers to 30 kilometers, 30.1 kilometers to 40 kilometers, 40.1 kilometers to 50 kilometers. In some embodiments, the range may include an arbitrary value, including, from 0 to 1 kilometers, 1.1 kilometers to 2 kilometers, 2.1 kilometers to 3 kilometers, 3.1 kilometers to 40 kilometers, 4.1 kilometers to 5 kilometers, 5.1 kilometers to 6 kilometers, 6.1 kilometers to 7 kilometers, 7.1 kilometers to 80 kilometers, 8.1 kilometers to 9 kilometers, 9.1 kilometers to 10 kilometers. In some embodiments, the range may include any suitable value, including, from 0 to 100 meters, 101 meters to 200 meters, 201 meters to 300 meters, 301 meters to 400 meters, 401 meters to 500 meters, 501 meters to 600 meters, 601 meters to 700 meters, 701 meters to 800 meters, 801 meters to 900 meters, 901 meters to 1000 meters. In some embodiments, the server may broadcast the current order to terminals associated with a vehicle that is available to accept the current order. In some embodiments, the server may broadcast the current order to terminals associated with vehicles that are available to accept the current order and within the range from the target locations of the user equipment currently. Therefore, it is important for the server to determine a load status of a vehicle to determine whether the vehicle is available to accept an order.

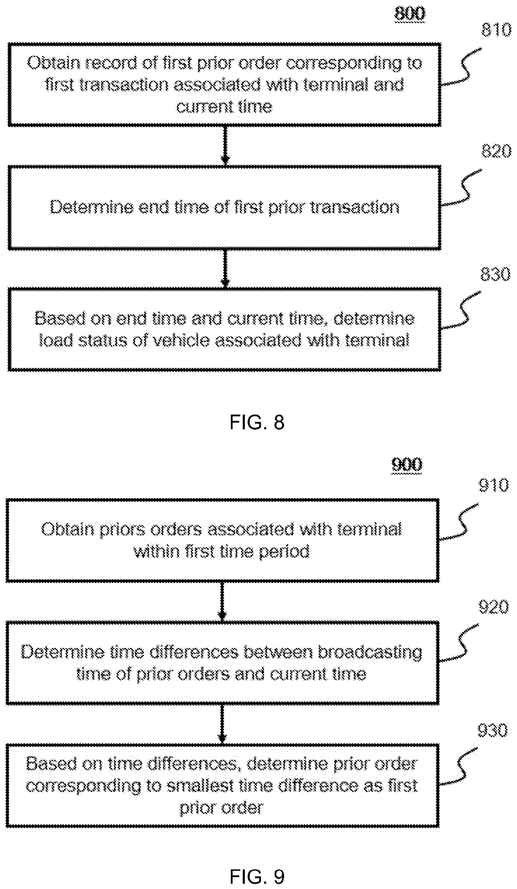

FIG. 8 is a flowchart of an exemplary method and/or process 800 for determining a load status of a vehicle according to some embodiments of the present disclosure. In some embodiments, the process and/or method 800 may be implemented in the transportation system 100 as illustrated in FIG. 1. For example, the process and/or method 800 may be implemented as one or more sets of instructions and stored in database 140 and/or storage 220, and invoked and/or executed by processor 210.

The processor 210 may be a processor of a server supporting a driving service platform. The platform may be an Internet based platform that connects driving service providers and driving service receivers through Internet.

According to FIG. 8, a driving service provider may be one of the vehicles 160-1, 160-2, ... 160-n in FIG. 1. For example, the vehicle may be a taxi, an UberTM car, a commercial vehicle, and/or any form of vehicle that provide commercial driving services for users. The vehicle may correspond to a terminal, such as any one of the terminals 130-1, 130-2, ... 130-n in FIG. 1. The terminal may be an electronic device in the vehicle connected to the driving service platform. A driving service receiver may be a user equipment of a user, such as user equipments 150-1, 150-2, 150-3, or 150-4.

In step 810, processor 210 (e.g., via order obtaining module 410) may obtain a record of a first prior order associated with a first prior transaction associated with terminal 130. The first prior order may refer to the latest order accepted by terminal 130. As described herein, the term "transaction" may refer to a transaction of a service that the driver of the vehicle drives a passenger from a pickup location (i.e., the passenger's initial position) to a destination location (i.e., the passenger's destination). In some embodiments, the first prior order may have been executed by terminal including two scenarios. One scenario is that the driver associated with terminal 130 has reached the destination of the first prior order (e.g., a taxi has arrived a destination of its previous passenger). The other scenario is that the driver associated with the terminal 130 may have already accepted the first prior order, but has not yet arrived at the destination with a passenger associated with the first prior order (e.g., a taxi has accepted the order of a previous passenger but has not yet arrived the destination, so the previous passenger is still in the taxi). In some embodiments, the first prior order may have not yet been executed by terminal. Detail description about the method of determining the first prior order may be described in FIG. 9. In some embodiment, the first prior order may be stored in database 140. In some embodiments, the first prior order may be stored in memory 720 of the terminal 130. In some embodiments, the first prior order may be stored in storage 220 of server 110. In step 810, processor 210 may also obtain/acquire a current time. As described herein, the term "current time" may refer to the time when processor 210 obtain/acquire the record of the first prior order.

In step 820, processor 210 may determine an end time of the first prior transaction. In some embodiments, the end time of the first prior transaction may be obtained from the record of the first prior order. In some embodiments, the end time of the first prior transaction may be known when the passenger pays for the first prior transaction. In some embodiments, the end time of the first prior transaction may be known when the passenger or the driver confirms the completion of the first prior transaction. For example, when a transaction is completed, the end time of the transaction may be recorded. As another example, the driver may manipulate on a user interface on the terminal (for example, click at a confirmation button indicating a transaction has been completed), and the system may record the time of the manipulation as the end time of the transaction. In some embodiments, even though the first prior transaction has not been completed (i.e., the driver has not arrived at the passenger's destination), the end time of the first prior transaction may be calculated and/or estimated by the processor 210. In some embodiments, processor 210 (e.g., time calculation module 420) may determine the end time of the first prior transaction based on one or more features of the first prior order. The feature of the first prior order may include its initial position, its destination, the time that the first prior order is accepted, the time when a driver picks up a passenger corresponding to the first prior order, including the time determined by the passenger when he is picked up and/or the real time when the passenger is picked up by the driver, a distance from the initial position to the destination, a plurality of locations of one or more routes and/or paths from the initial position to the destination, or the like, or any combination thereof. In some embodiments, processor 210 may determine the end time of the first prior transaction based on a location of the driver when he/she accepted the first prior order and a velocity of a vehicle corresponding to the driver. In some embodiments, to determine the end time of the first prior transaction, the location of the passenger corresponding to the first prior order when the first prior order was accepted may also be needed.

In step 830, processor 210 (e.g., status determination module 440) may determine a load status of vehicle associated terminal 130 based on the end time of the first prior transaction obtained in step 820 and the current time. Based on the end time of the first prior transaction obtained on step 820 and the current time, processor 210 may determine whether the first prior transaction has been completed. If the end time is later than the current time, it may indicate that the first prior transaction has not been completed yet, thus system 100 may determine that the vehicle is unavailable to accept an order. Accordingly, system 100 may broadcast or send the current new order to a terminal when its corresponding vehicle is available to accept an order.

In some embodiments, however, system 100 may still broadcast and/or send the current new order to the terminal even if the prior transaction has not been completed. When system 100 determines that the prior transaction will be completed within a predetermined time, system 100 may still broadcast and/or send the current new order to the terminal and allow the driver of the corresponding vehicle to accept the order before the prior transaction ends, so as to reduce the idle time (i.e., a time that the vehicle stays available to accept new orders) of the vehicle. To this end, system 100 may obtain the vehicle's current location and the destination of the first prior transaction, and then determine an estimated end time of the first prior transaction. The determination may be based on current location of the vehicle, the distance between the current location and the destination of the first prior transaction, the distance between the current location and the initial position of the first prior transaction, the average speed of the vehicle and/or traffic condition between the current location and the initial position and/or destination, etc. For example, if the vehicle's current location is 1 kilometer from the destination of the first prior transaction, system 100 may obtain traffic condition information in this 1 kilometer, such as average speed of vehicles in this 1 kilometer, and then determine how much time (i.e., the estimated ends time of the first prior transaction) the vehicle needs to reach the destination based on the average speed. System 100 then may determine a difference between the current time and the estimated end time of the prior transaction. When the difference is shorter than the predetermined time, system 100 may still broadcast the current order to the terminal associated with the vehicle (e.g., the vehicle driver's order receiving mobile phone) even if the vehicle has not yet reach the destination of the first prior transaction. The predetermined time may be of any suitable value, including, e.g., 10 minutes, 9 minutes, 8 minutes, 7 minutes, 6 minutes, 5 minutes, 4 minutes, 3 minutes, 2 minutes, or 1 minutes.

FIG. 9 is a flowchart of an exemplary method and/or process 900 for determining the first prior order according to some embodiments of the present disclosure. Process 900 may be implemented in system 100 illustrated in FIG. 1. For example, method and/or process 900 may be stored in database 140 and/or storage 220 as one or more sets of instructions. To determine the first prior order associated with a vehicle, the processor 210 may execute the one or more sets of instructions to conduct the following steps.

In step 910, processor 210 (e.g., order obtaining module 410) may obtain one or more prior records within a first time period, wherein each prior record corresponds to one of prior transactions associated with the terminal 130. The first time period may be predetermined. Each prior order may correspond to a broadcasting time. As described herein, broadcasting time of an order may refer to the time when the order is accepted by a terminal associated with a vehicle. The first time period may be relevant to the current time. In some embodiments, processor 210 may obtain the one or more prior orders associated with terminal 130 within a suitable time, e.g., 3 hours, 2.5 hours, 2 hours, 1.5 hours, 1 hours, 30 minutes, 20 minutes, or 10 minutes.

In some embodiments, the first time period may be fixed time period. In some embodiments, the first time period may be adjustable according to some factors. The factors may include the current time, road sessions, an administrative district, a number of transactions associated with terminal 130 at different times of a day, a total number of transactions associated with terminal 130, or the like, or any combination thereof. For example, if the current time is in the morning at 9 on a workday, the first time period may be 30 minutes from the current time. If the current time is in the night at 9 on a workday, the first time period may be 2 hours from the current time. If the vehicle associated with terminal 130 is in a city with a huge population, the first time period may be shorter than the case that the vehicle associated with terminal 130 is in a city with a relative smaller population. In some embodiments, the more the transactions associated with terminal 130 are, the shorter the first time period may be.

In step 920, for each of the prior order, processor 210 may extract its broadcasting time. Further, processor 210 may determine a time difference between the broadcasting time and the current time.

In step 930, processor 210 may determine the first prior order based on the time differences determined in step 920. In some embodiments, processor 210 may sort the determined time differences by using a sort algorithm. The sort algorithm may include an insert sort, a selection sort, a merge sort, a heap sort, a bubble sort, a shell sort, a comb sort, a counting sort, a bucket sort, a radix sort, or the like, or any combination thereof. Then, processor 210 may determine a prior order corresponding to the smallest time difference among the determined time differences as the first prior order.

In some embodiments, more steps may be added into the process 900. For example, the intermediate data and/or the final data of the process may be stored. Merely by way of example, system 100 (e.g., database 140, storage 220, or other modules or units capable of storing data in system 100) may store the determined time difference of the prior orders stored.

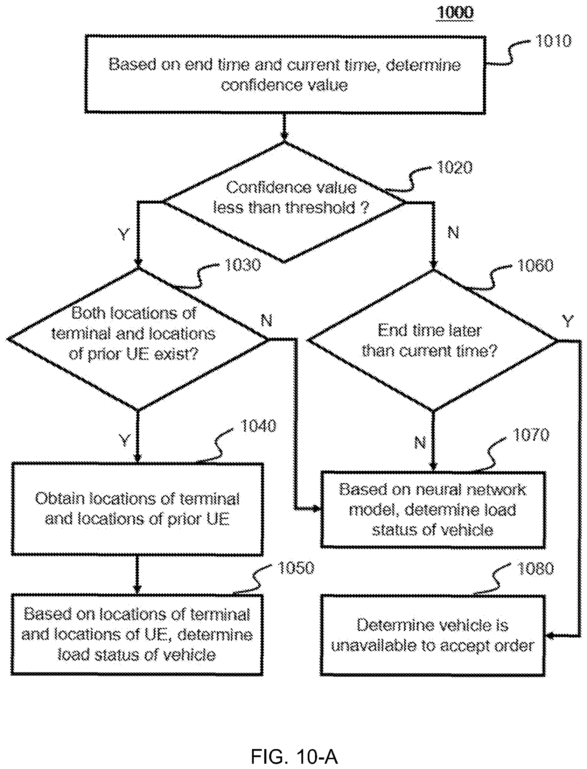

FIG. 10-A is a flowchart of an exemplary method and/or process 1000 for determining a load status of a vehicle according to some embodiments of the present disclosure. For example, method and/or process 1000 may be stored in database 140 and/or storage 220 as one or more sets of instructions. To determine the first prior order associated with a vehicle, the processor 210 may execute the one or more sets of instructions to conduct the following steps.

In step 1010, processor 210 may determine a confidence value of the estimated end time based on the estimated end time of the first prior transaction and the current time. The confidence value may reflect the progress of a transaction, i.e., the percentage of a transaction has been completed, or the percentage of the transaction that has not yet been completed. It may also reflect how reliable an estimated end time of a transaction might be. For example, a terminal 130 may accept an order at half past eleven in a morning. According to the processor's 210 determination, the driver of the vehicle that corresponds to the terminal (e.g., a taxi driver that holding a smart phone that has an application of the method and/or process installed therein) may spend 25 minutes to travel from the initial position of the order to the destination of the order. Thus the end time of the transaction determined may be five minutes before twelve. The current time is ten minutes before twelve. The confidence value may be determined by the difference between the current time and the end time of the transaction and the time spent from the initial position of the order to the destination of the order. In this example, the difference between the current time and the end time of the transaction is 5 minutes and the time spent from the initial position of the order to the destination of the order is 25 minutes, and method and/or processor 210 may determine the confidence value be 5/25=20%.

In step 1020, method and/or processor 210 may compare the confidence value obtained in step 1010 with a threshold. The threshold may be any suitable value from zero to one. In some embodiments, the threshold may include a value from 0 to 0.5 or from 0.51 to 1. In some embodiments, the threshold may include a value from 0 to 0.2, from 0.21 to 0.4, from 0.41 to 0.6, from 0.61 to 0.8, or from 0.81 to 0.1. The threshold may be fixed, or may be adjustable according to some factors, including, e.g., the current time, road sessions, an administrative district, or the like, or any combination thereof. In step 1020, method and/or processor 210 may further determine whether the confidence value is less than the threshold. If the confidence value is less than the threshold, the method and/or process 1010 may go to step 1030, if not, the method and/or process 1010 may go to step 1060.

In step 1030, method and/or processor 210 may determine whether both a plurality of locations of terminal 130 (also referred to herein as "terminal locations") and a plurality of locations of a prior user equipment 150 (also referred to herein as "UE locations") exist. The prior user equipment may be associated with the first prior order and/or transaction, which is requested by a prior passenger. If both the plurality of locations of terminal 130 and a plurality of locations of a prior user equipment 150 exist, the method and/or process 1010 may go to step 1040, if not, the process 1010 may go to step 1070.

In step 1070, when processor 210 is unable to receive locations of the terminal 130 or locations of the prior user equipment 150, processor 210 may determine the load status of the vehicle based on a neural network model.

When the processor 210 is able to receive locations of both of the terminal 130 and the prior user equipment 150, however, the processor 210 may process steps 1040 to determine the load status of the vehicle based on the locations of the terminal 130 and the prior user equipment 150. Here, the load status of the vehicle may reflect whether the vehicle associated with the terminal (e.g., a taxi) is available to provide service to the current user equipment of the current and/or new user equipment. For example, the load status of the vehicle may include an idle state and an in-service state. In the idle state, the vehicle may be available to accept an order of service. In the in-service state, vehicle may be providing a service as defined in the order of a transaction the associated terminal accepted. The processor 210 may determine that the vehicle is unavailable to accept another order if the vehicle is in in-service state. Alternatively, the processor 210 may determine that the vehicle is unavailable to accept another order if the vehicle is in in-service state and not close to its destination. To determine the state of the vehicle, the processor 210 may determine how far the terminal (or the vehicle) is away from the prior user equipment (or the prior user) during the time of the first prior transaction.

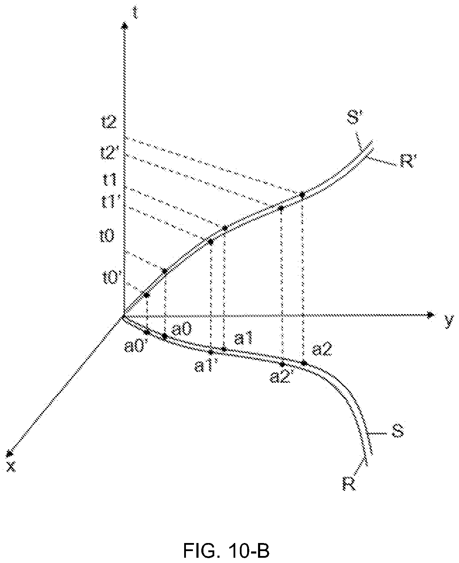

FIG. 10-B illustrates exemplary traveling paths of the terminal 130 and the prior user equipment 150 during a second time period. In some embodiments, the second time period may be a time period within the first time period. For example, if the first prior transaction is a taxi service, the second time period may be a time period after the first prior order has been accepted, so that the taxi has picked up the passenger. The second time period may be less than the first time period. In some embodiments, the second time period may include the last 10 minutes, 9 minutes, 8 minutes, 7 minutes, 6 minutes, 5 minutes, 4 minutes, 3 minutes, 2 minutes, or 1 minute with respect to the current time. In FIG. 10-B, the x-y plane represents the surface of the ground on which the vehicle moves; the t axis represents time. Accordingly, the curve S represents the route and/or path that the vehicle moves along on the ground, and the curve S' reflects the position of the terminal 130 with respect to time. The curve R represents the route and/or path that the prior user equipment 150 moves along on the ground, and the curve R' reflects the position of the prior user equipment with respect to time.

The processor 210 may communicate with the terminal 130 at a first plurality of time points (e.g., t0, t1, t2 ...) within the second time period and receive and/or inquire a first plurality of locations (e.g., a0, a1, a2 ...) of the terminal 130. The first plurality of time points may also be referred to as a first set of instance. Each of the first plurality of locations may be associated with one instance of the first set of instance. Similarly, the processor 210 may also communicate with the prior user equipment 150 at a second plurality of time points (e.g., t0', t1', t2' ...) within the second time period and receive and /or inquire a second plurality of locations (e.g., a0', a1', a2' ...) of the prior user equipment 150. The second plurality of time points may also be referred to as a second set of instance. Each of the second plurality of locations may be associated with one instance of the second set of instance. The communication to the terminal 130 and the communication to the prior user equipment 150 may be independent communications.

The processor 210 may select a first time point (e.g., t2) from the first plurality of time points and select a second time point (e.g., t2') from the second plurality of time points adjacent to the first time point, wherein the first time point corresponds with a first location (e.g., a2) of the terminal 130 (or the vehicle) and the second time point corresponds with a second location (e.g., a2') of the prior user equipment. For example, the first time point and the second time point may be time points that may respectively be the last time points that the processor 210 receives location information of the terminal and the prior user equipment. Then, the processor 210 may compare the first location and the second location. When the distance between the first location and the second location is less than a threshold value, meaning that the user was likely traveling together with the terminal 130, the processor 210 may determine that the vehicle is in a state of in service with a client. If, however, the distance is longer or equal to the threshold value, the processor 210 may determine that the vehicle is in an idle state and available to accept a new order.

Accordingly, in step 1040, processor 210 may obtain the first plurality of locations of terminal 130 and the second plurality of locations of prior user equipment 150. In some embodiments, processor 210 may obtain the first plurality of locations and the second plurality of locations.

In some embodiments, server 110 and/or processor 210 may sample or obtain the first plurality of locations of terminal 130 through network interface 230 at a first frequency within the second time period. The first frequency may include once per 10 seconds, once per 9 seconds, once per 8 seconds, once per 8 seconds, once per 7 seconds, once per 6 seconds, once per 5 seconds, once per 4 seconds, once per 3 seconds, once per 2 seconds, once per 1 second, once per 0.5 second, or other values. In some embodiments, the first frequency may be fixed during the first prior transaction. In some embodiments, the first frequency may be variable based on the velocity of the vehicle, different periods/phases, different road sections, or the like, or any combination thereof. In some embodiments, during the initial phase of the transaction, as the driver approaches to the prior passenger, the processor 210 may set the first frequency to be relatively high, for example, once per fifty millisecond or once per one second. While after the driver picks up the prior passenger, the processor 210 may reduce the first frequency to, for example, once per two second or once per three second. In some embodiments, during the last phase of the transaction, as the vehicle is about to arrive at the destination of the prior transaction, the first frequency may be raised to a higher value again, for example, once per fifty millisecond or once per one second. It should be noted that the above description about the first frequency is merely exemplary, and is not intended to be limiting.

In some embodiments, server 110 may sample or obtain the second plurality of locations of prior user equipment 150 through network interface 230 at a second frequency within the second time period. The second frequency may include once per 10 seconds, once per 9 seconds, once per 8 seconds, once per 8 seconds, once per 7 seconds, once per 6 seconds, once per 5 seconds, once per 4 seconds, once per 3 seconds, once per 2 seconds, once per 1 second, once per 0.5 second, or other values. In some embodiments, the second frequency may be the same with the first frequency. In some embodiments, the second frequency may be different from the first frequency.

In some embodiments, the second frequency may be fixed frequency during the first prior transaction. Alternatively, the second frequency may be variable based on the velocity of the vehicle, different periods/phases, different road sections, or the like, or any combination thereof. In some embodiments, the second frequency may be variable during the first prior transaction. For example, during the initial phase of the transaction when the vehicle approaches to the user of the prior user equipment (the prior passenger), the second frequency may be of a high value, for example, once per one second or once per two second. After the vehicle picks up the prior passenger, the server 110 (or the processor 210) may determine a velocity of the vehicle. As the velocity becomes higher (e.g., higher than a threshold value, such as 10 meter per second), the server 110 (or the processor 210) may reduce the second frequency to, for example, once per three second or once per five second. In some embodiments, during the last phase of the transaction, as the vehicle is about to arrive at the destination, the second frequency may be raised again to, for example, once per one second or once per two second. The description about the second frequency may be similar to the description about the first frequency.

In step 1050, processor 210, e.g., status determination module 440, may determine the load status of the vehicle based on the first plurality of locations of terminal 130 and the second plurality of locations of prior user equipment 150.

In some embodiments, based on the first plurality of locations of terminal 130 and the second plurality of locations of prior user equipment 150, processor 210 may determine a route of terminal 130 and a route of prior user equipment 150. In some embodiments, processor 210 may determine a similarity between the route of terminal 130 and the route of prior user equipment 150. For example, the processor 210 may compare shape of the route of terminal 130 and the route of prior user equipment 150 and determine the similarity of the two. Alternatively, the processor 210 may recognize a first plurality of predetermined key points and/or locations on the route of terminal 130 and a second plurality of predetermined key points and/or locations on the route of prior user equipment 150, and determines whether the first and second plurality of predetermined key points and/or locations of the two routes are the same. Processor 210 may determine that the two route are the same when the first plurality of predetermined key points and/or locations matches the second plurality of predetermined key points and/or locations. Based on the similarity, processor 210 may determine the load status of the vehicle associated with terminal 130. For example, if the similarity is larger than a similarity threshold, processor 210 may determine the vehicle in an in-service state. Processor 210 may further determine that a vehicle in the in-service state is in an unavailable state to accept another order, or determine that a vehicle in the in-service state is unavailable to accept another order unless the vehicle is approaching the destination. If the similarity is equal to or smaller than a similarity threshold, processor 210 may determine the vehicle in an idle state and available to take another order.

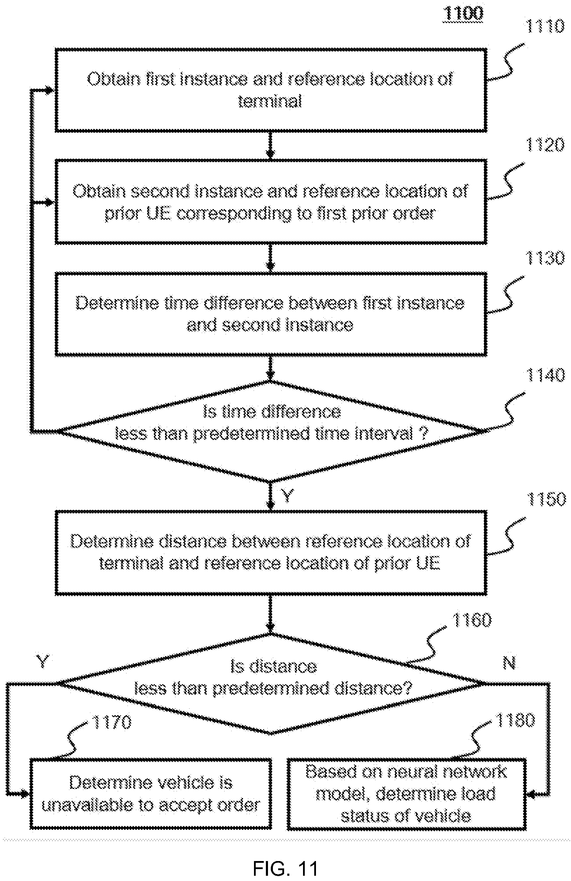

In some embodiments, processor 210 may obtain a reference location of terminal 130 from the first plurality of locations of terminal 130 associated with a first instance and obtain a reference location of prior user equipment 150 from the second plurality of locations of prior user equipment 150 associated with a second instance. Detail description may be described in FIG. 11. Based on the reference location of terminal 130 and the reference location of prior user equipment 150, processor 210 may determine the state of the vehicle associated with terminal 130.

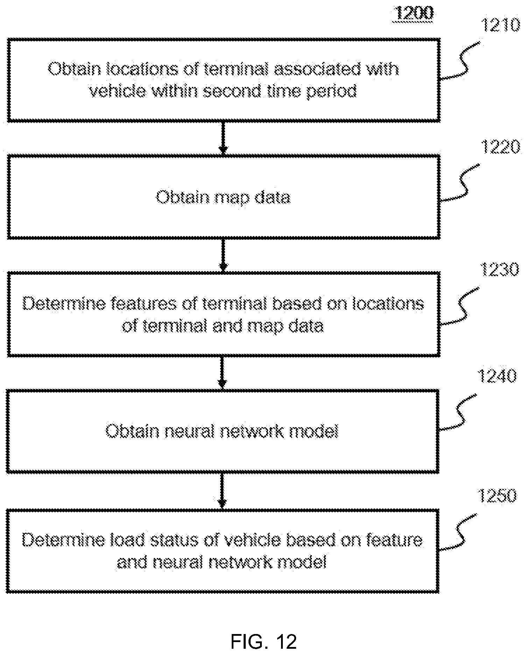

In step 1020, if processor 210 determine the confidence value is not less than the threshold, the method and/or process 1010 may go to step 1060. In step 1060, processor 210 may determine whether the end time of the first prior transaction is later than the current time. If end time of the first prior transaction is later than the current time, processor 210, e.g., status determination module 440 may determine the vehicle is unavailable to accept an order in step 1080. Else, if the end time of the first prior transaction is not later than the current time, processor 210, e.g., status determination module 440 may determine the load status of the vehicle based on a neural network model in step 1070. Detail description about the method and/or process for determine the load status of the vehicle based on a neural network model will be described in FIG. 12.

In some embodiments, more steps may be added into the method and/or process 1000. For example, the intermediate data and/or the final result of the method and/or process may be stored in database 140, storage 220, or other modules or units capable of storing data in system 100. In some embodiments, when processor 210 obtains the first plurality of locations of terminal 130 in step 1040, the processor 210 may determine the load state of the vehicle based on the first plurality of locations of terminal 130 by using a neural network model, without executing step 1050. Besides, in some embodiments, for a plurality of terminals, in step 1020, the condition that confidence value is less than the threshold may be met. In some embodiments, for the plurality of terminals, in step 1020, the condition that confidence value is less than the threshold may not be met. In some embodiments, for one part of the plurality of terminals, the condition that confidence value is less than the threshold may be met, and for the other part of the plurality of terminals, the condition that confidence value is less than the threshold may not be met. All of them may be within the scope of the present disclosure.

FIG. 11 is a flowchart of an exemplary method and/or process for determining a load status of a vehicle based on a reference location of a terminal and a reference location of a prior user equipment according to some embodiments of the present disclosure. The prior user equipment may be associated with the first prior order/transaction, which is requested by a prior passenger. The process and/or method 1000 may be implemented in the transportation system 100 as illustrated in FIG. 1. For example, the process and/or method 1000 may be implemented as one or more sets of instructions and stored in database 140 and/or storage 220, and invoked and/or executed by processor 210.

In step 1110, processor 210 may obtain a reference location of terminal 130 from the first plurality of locations of terminal130 associated with a first instance. The first instance may belong to the first set of instances within the second time period. The first set of instances may be the instances when the locations of terminal 130 are obtained. In step 1120, processor 210 may obtain a reference location of prior user equipment 150 from the second plurality of locations of prior user equipment 150 associated with a second instance. The second instance may belong to the second set of instances within the second time period. The second set of instances may be the instances when the locations of prior user equipment 150 are obtained.

In some embodiments, the first instance and the second instance may be same. That is to say, the processor 210 may happen to obtain the location of terminal 130 and the location of prior user equipment 150 at the same time. In some embodiments, the first instance may be a latest time that terminal 130 sends its location to processor 210. In some embodiments, the second instance may be a latest time that prior user equipment 150 sends its location to processor 210. In some embodiments, the first instance and the second instance may be different. In some embodiments, the first instance and/or the second instance may be two instances within the second time period.

In step 1130, before step 1130, processor 210 may determine a time difference between the first instance and the second instance. Then, in step 1140, processor 210 may determine whether time difference between the first instance and the second instance is less than a predetermined time interval. In some embodiments, the predetermined time interval may be within the range from 0 to 5 minutes. In some embodiments, the predetermined time interval may include any suitable value, including, e.g., from 0 to 1minute, from 1.1 minutes to 2 minutes, from 2.1 minutes to 3 minutes, from 3.1 minutes to 4 minutes, or from 4.1 minutes to 5 minutes. In some embodiments, the predetermined time interval may include any suitable value, including, but not limited to, e.g., 0.1 second, 0.25 second, 0.5 second, 1 second, 2 seconds, 3 seconds, 5 seconds, 10 seconds, 15 seconds, 20 seconds, 30 seconds, etc. If the time difference between the first instance and the second instance is less than the predetermined time interval, the method and/or process 1100 may go to step 1150. If the time difference between the first instance and the second instance is not less than the predetermined time interval, then the method and/or process 1100 may go back to step 1110 or step 1120 to obtain a new reference location of mobile terminal 130 associated with a new first instance or a new reference location of prior user equipment 150 associated with a new second instance.

In step 1150, processor 210 may determine a distance between the reference location of terminal 130 and the reference location of prior user equipment 150.

In step 1160, processor 210 may determine whether distance between the reference location of terminal 130 and the reference location of prior user equipment 150 is less than a predetermined distance. In some embodiments, the predetermined distance may be from 0 to 300 meters. In some embodiments, the predetermined distance may include an arbitrary value, including, e.g., from 0 to 50 meters, 50.1 meters to 100 meters, 100.1 meters to 150 meters, 150.1 meters to 200 meters, 250.1 meters to 300 meters or a value larger than 300 meters. In some embodiments, the first instance may not be concurrent with the second instance, the time difference may result in the distance between the reference location of terminal 130 and the reference location of the prior user equipment 150. Besides, the location of both the terminal 130 and the prior user equipment 150 may be subject to some random error, the predetermined distance may be set accordingly to tolerate such error.

If the distance between reference location of terminal 130 and the reference location of prior user equipment 150 is less than the predetermined distance, processor 210, e.g., status determination module 440, may determine the vehicle is in an unavailable state in step 1170. The unavailable state may indicate that the vehicle is unavailable to accept a new order. When the distance is less than the predetermined distance, the prior user equipment 150 may be near the terminal 130, indicating that the passenger may be in the vehicle associated with the terminal 130.

If the distance difference between reference location of terminal 130 and the reference location of prior user equipment 150 is not less than the predetermined distance, processor 210, e.g., status determination module 440, may determine the load status of the vehicle based on a neural network model in step 1180. In some embodiments, step 1180 may take the form of method and/or process 1200, as shown in FIG. 12.

In some embodiments, more steps may be added into the method and/or process 1100. For example, the intermediate data and/or the final result of the method and/or process may be stored in database 140, storage 220, or other modules or units capable of storing data in system 100. In some embodiments, the order or sequence for two steps, for example, step 1110 and 1120, may be switched. In some embodiments, some steps of the method and/or process 1100, for example, step 1110 and step 1120, may be performed concurrently.

FIG. 12 is a flowchart of an exemplary method and/or process for determining a load status of a vehicle based on a neural network module according to some embodiments of the present disclosure. In some embodiments, the process and/or method 1200 may be implemented in the transportation system 100 as illustrated in FIG. 1. For example, the process and/or method 1200 may be implemented as one or more sets of instructions and stored in database 140 and/or storage 220, and invoked and/or executed by processor 210.

In step 1210, processor 210 may obtain a first plurality of locations of terminal 130 associated with the vehicle. In some embodiments, the first plurality of locations of terminal 130 may be the same with the first plurality of locations of terminal130 within the second time period in step 1040.

In step 1220, processor 210 may obtain map data of a map of a geographic area where the vehicle associated with terminal 130. In some embodiments, the geographic area may be a portion or an entirety of a prefectural area, a metropolitan area, an urban area, a rural area, etc. In some embodiments, the map may include a two-dimensional map or a three-dimensional map. The map data may include locations of man-made objects and natural objects. The man-made objects may include streets, bridges, buildings, or the like, or any combination thereof. The natural objects may include waters, mountains, forests, or the like, or any combination thereof. The map may encompass the first plurality of locations of terminal130 and/or user equipment 150.

In some embodiments, there may be a plurality of vehicles in a vicinity of the location of the terminal 130. In some embodiments, the vicinity may be a range having a distance from the location of terminal 130. In some embodiments, the distance may be 1 km, 2 km or any other suitable distance. In some embodiments, the vicinity may be an area encompassing the location of terminal 130 within the map area. The area may include a block, a suburban area, a downtown area, etc.

In step 1230, processor 210, e.g., feature determination module 450, may determine one or more features of terminal 130 based on the first plurality of locations of terminal130 and the map data. The features of terminal 130 may include information in relation to time, information in relation to velocity and information in relation to locations. The information in relation to time may include the time when the driver is in service, the current time, the first set of instances, years of service of the driver, or the like. The years of service may refer to the duration of service for a driver. The information in relation to velocity of the vehicle may include a velocity of the vehicle within the second time period, an average velocity of vehicles in a vicinity of the first plurality of locations of terminal130, a maximal velocity of vehicles in the vicinity of the first plurality of locations of terminal130, a minimal velocity of vehicles in the vicinity of the first plurality of locations of terminal130, a difference between the velocity of the vehicle and the average velocity, a difference between the velocity of the vehicle and the maximal velocity, a difference between the velocity of the vehicle and the minimal velocity, or the like, or any combination thereof. The information in relation to locations may include active areas associated with the driver, road sections passed through by the vehicle, the number of the road sections passed through by the vehicle, an average number of road sections passed through by the vehicles in the vicinity of the location, a difference of the number of road sections passed through by the vehicle and the average number of road sections passed through by the vehicles, or the like, or any combination thereof. In some embodiments, the feature of terminal 130 may also include the number of turnings of the vehicle associated with terminal 130.

In step 1240, processor 210 may obtain a neural network model. The neural network model may be stored in database 140, storage 220, or other modules or units capable of storing in system 100. In some embodiments, for each of terminal 130, the neural network models may be the same. In some embodiments, for each of terminal 130, the neural network models may be different. In some embodiments, for different cities, the neural network models may be the same. In some embodiments, for different cities, the neural network models may be different. In some embodiment, for different time periods, the neural network models may be the same. In some embodiment, for different time periods, the neural network models may be different. The neural network model may include an input layer and an output layer. In some embodiments, the neural network model may further include one or more hidden layers between the input layer and the output layer. Each layer may include one or more nodes. In some embodiments, for each layer, the number of nodes may be the same, e.g., 200 or more. In some embodiments, for each layer, the numbers of nodes may be different. In some embodiments, the number of the inputs of the neural network model may be larger than 500. The output layer may generate one or more outputs. In some embodiments, the output layer may include two outputs. In some embodiments, the neural network may include three hidden layers.

The neural network model may include a Kohonen network model, a feedback neural network model, a radial basis function network model, a recurrent neural network model, a modular neural network model, or the like. The recurrent neural network model may include a Hopfield network model, a fully recurrent neural network model, a simple recurrent neural network model, an echo state network model, a bi-directional recurrent neural network model, a hierarchical recurrent neural network model, a stochastic neural network model, or the like. The modular neural network model may include an associative neural network model, or the like. In some embodiments, the output function of the neural network may be a logistic function.

In step 1250, processor 210, e.g., status determination module 440, may determine the load status of the vehicle associated with terminal 130. The features of terminal 130 may be input to the neural network model.

In some embodiments, more steps may be added into the method and/or process 1200. For example, the intermediate data and/or the final result of the method and/or process may be stored in database 140, storage 220, or other modules or units capable of storing data in system 100. In some embodiments, some steps of the method and/or process 1200 may be performed concurrently, for example, step 1210, step 1220 and step 1240.

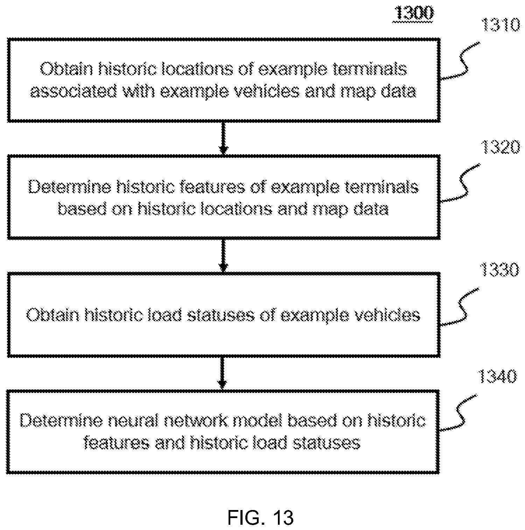

FIG. 13 is a flowchart of an exemplary method and/or process for determining a neural network model according to some embodiments of the present disclosure. In some embodiments, processor 1300 for determining a neural network model may be implemented in system 100 illustrated in FIG. 1. For example, method and/or process 1200 may be stored in database 140 and/or storage 220 as a form of instructions, and invoked and/or implemented by processor 210.

In step 1310, processor 210 may obtain a plurality of historic locations of a plurality of example terminals 130 associated with a plurality of example vehicles and the map data. In some embodiments, the plurality historic locations of a plurality of example terminals 130 may be within a third time period. The third time period may be any suitable time period, including, e.g., last one week, last two weeks, last three weeks, last four weeks, last one month, last two months, last three months, last four months, last five months, last six months, last seven months, last eight months, last nine months, last ten months, last eleven months, last one years, last two years, etc. The third time period may provide useful data for training a neural network model to determine the load status of a vehicle based on features of the vehicle. In some embodiments, the third time period may be unrelated to the current time. In some embodiments, the third time period may be related to the current time. For example, if the current time is nine o'clock in the morning, the third time period may include a time period near nine o'clock in the morning. If the current time is in a workday, the third time period may include a time period of a workday.

In step 1320, processor 210, e.g., feature determination module 450, may determine historic features of each example terminal 130 of the plurality of example terminals based on the map data and the plurality of historic locations of each example terminal 130. The historic features of each example terminal 130 (also referred to herein as the first historic features) may be similar with the features determined in step 1130 of method and/or process 1100.

In step 1330, processor 210 may obtain historic load statuses of the plurality of example vehicles. In some embodiments, the historic load statuses may be reported by example terminals. In step 1340, processor 210 determine the neural network model based on the historic features of the plurality of example terminals and the historic load statuses of the plurality of example vehicles associated with the plurality of example terminals. A neural network model may include one input layer and one output layer. In some embodiments, the neural network model may include one or more hidden layers between the input layer and the output layer. The historic features may be treated as inputs of the input layer of the neural network model. The historic load statuses of the plurality of example vehicle may be treated as outputs of the output layer of the neural network model. In some embodiments, one or more hidden layers of the neural network model may be associated with an activation function. The activation function may a linear function or a non-linear function. In some embodiments, the activation function may include an identity function, a binary step function, a sigmoid function, a hyperbolic tangent function (tanh function), a rectified linear unit (ReLU) function, a leaky-ReLU function, a parametric ReLU function, an exponential ReLU function, a softplus function, a bent identity function, a sinusoid function, a sinc function, a Gaussian function, or the like. In some embodiments, the neural network model may be corrected by using a cross-validation and similar technique. In some embodiments, the neural network model may be corrected through a regularization method. The regularization method may include a L1 regularization method, L2 regularization method, soft weight sharing method, dropout, a data augmentation method, or the like, or any combination thereof.

In some embodiments, more steps may be added into the method and/or process 1300. Processor 210, e.g., cluster module 460, may determine one or more clusters of the example terminals 130 based on the locations of the example terminals. In some embodiments, processor 210 may determine historic features with respect to a cluster of example terminals. Cluster module 460 may determine the clusters of example terminals by using a clustering algorithm. The clustering algorithm may include a k-means clustering algorithm, a fuzzy c-mean clustering algorithm, a hierarchical clustering algorithm, a Gaussian clustering algorithm, a MST based clustering algorithm, a kernel k-means clustering algorithm, a density based clustering algorithm, or the like. In some embodiments, cluster module 460 may determine clusters of terminals based on the latitude and longitude of the locations of terminals. The historic features with respect to a cluster of example terminals may include data in relation to velocity, area passed through, turning, etc. The data in relation to velocity may include the maximal velocity, the minimal velocity, an average velocity of vehicles associated with example terminals in a cluster, or the like, or any combination thereof. The data in relation to area passed through may include the maximal number of road sections, the minimal number of road sections, an average number of road sections passed through by vehicles associated with example terminals in a cluster, or the like, or any combination thereof. The data in relation to turning may include the maximal number of turning, the minimal number of turning, an average number of turning by vehicles associated with example terminals in a cluster, or the like, or any combination thereof.

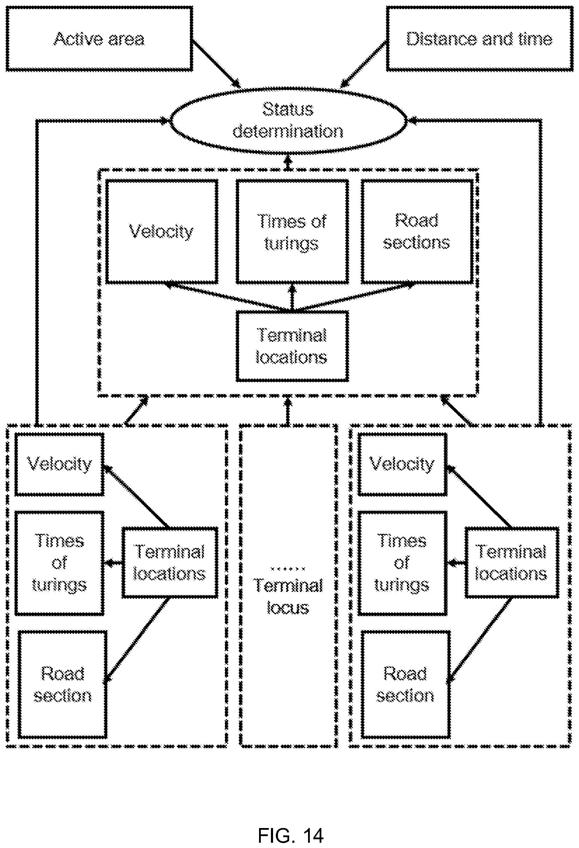

In some embodiments, processor 210 may obtain the number of orders accepted by example terminals. In some embodiments, processor 210 may determine active areas with respect to an example driver corresponding to an example terminal. In some embodiments, for each of example terminals, processor 210 may obtain the first prior order (latest order accepted by the terminal) and may determine an end time of transaction associated with the first prior order. In some embodiments, the input of the input layer of the neural network model may also include second historic features. The second historic features may include the data about velocity, the data about turning, the number of orders accepted by example terminals, active areas with respect to an example driver corresponding to an example terminal, the end time of transaction associated with the latest order accepted by each of example terminals, or the like, or any combination thereof. Based on the input of the input layer and the output of the output layer, processor 210 may determine the neural network model. FIG. 14 shows exemplary features for a neural network according to some embodiments or the present disclosure.

Having thus described the basic concepts, it may be rather apparent to those skilled in the art after reading this detailed disclosure that the foregoing detailed disclosure is intended to be presented by way of example only and is not limiting. Various alterations, improvements, and modifications may occur and are intended to those skilled in the art, though not expressly stated herein. These alterations, improvements, and modifications are intended to be suggested by this disclosure, and are within the scope of the exemplary embodiments of this disclosure.

Moreover, certain terminology has been used to describe embodiments of the present disclosure. For example, the terms "one embodiment," "an embodiment," and/or "some embodiments" mean that a particular feature, structure or characteristic described in connection with the embodiment is included in at least one embodiment of the present disclosure. Therefore, it is emphasized and should be appreciated that two or more references to "an embodiment" or "one embodiment" or "an alternative embodiment" in various portions of this specification are not necessarily all referring to the same embodiment. Furthermore, the particular features, structures or characteristics may be combined as suitable in one or more embodiments of the present disclosure.

Further, it will be appreciated by one skilled in the art, aspects of the present disclosure may be illustrated and described herein in any of a number of patentable classes or context including any new and useful process, machine, manufacture, or composition of matter, or any new and useful improvement thereof. Accordingly, aspects of the present disclosure may be implemented entirely hardware, entirely software (including firmware, resident software, micro-code, etc.) or combining software and hardware implementation that may all generally be referred to herein as a "module," "unit," "component," "device" or "system." Furthermore, aspects of the present disclosure may take the form of a computer program product embodied in one or more computer readable media having computer readable program code embodied thereon.

A computer readable signal medium may include a propagated data signal with computer readable program code embodied therein, for example, in baseband or as part of a carrier wave. Such a propagated signal may take any of a variety of forms, including electro-magnetic, optical, or the like, or any suitable combination thereof. A computer readable signal medium may be any computer readable medium that is not a computer readable storage medium and that may communicate, propagate, or transport a program for use by or in connection with an instruction execution system, apparatus, or device. Program code embodied on a computer readable signal medium may be transmitted using any appropriate medium, including wireless, wireline, optical fiber cable, RF, or the like, or any suitable combination of the foregoing.

Computer program code for carrying out operations for aspects of the present disclosure may be written in any combination of one or more programming languages, including an object oriented programming language such as Java, Scala, Smalltalk, Eiffel, JADE, Emerald, C++, C#, VB. NET, Python or the like, conventional procedural programming languages, such as the "C" programming language, Visual Basic, Fortran 2003, Perl, COBOL 2002, PHP, ABAP, dynamic programming languages such as Python, Ruby and Groovy, or other programming languages. The program code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider) or in a cloud computing environment or offered as a service such as a Software as a Service (SaaS).

Furthermore, the recited order of processing elements or sequences, or the use of numbers, letters, or other designations therefore, is not intended to limit the claimed processes and methods to any order except as may be specified in the claims. Although the above disclosure discusses through various examples what is currently considered to be a variety of useful embodiments of the disclosure, it is to be understood that such detail is solely for that purpose, and that the appended claims are not limited to the disclosed embodiments, but, on the contrary, are intended to cover modifications and equivalent arrangements that are within the scope of the disclosed embodiments. For example, although the implementation of various components described above may be embodied in a hardware device, it may also be implemented as a software only solution, e.g., an installation on an existing server or mobile device.

Similarly, it should be appreciated that in the foregoing description of embodiments of the present disclosure, various features are sometimes grouped together in a single embodiment, figure, or description thereof for the purpose of streamlining the disclosure aiding in the understanding of one or more of the various embodiments. This method of disclosure, however, is not to be interpreted as reflecting an intention that the claimed subject matter requires more features than are expressly recited in each claim. Rather, claim subject matter lie in less than all features of a single foregoing disclosed embodiment.

## Claims

1. A system, comprising:
a computer-readable storage medium (220) including a first set of instructions for determining a load status of a vehicle (160-1, 160-2...); and a processor (210) in communication with the computer-readable storage medium, wherein when executing the first set of instructions, the processor is directed to:
establish a communication with a terminal (130-1, 130-2...) associated with the vehicle;
obtain records of a plurality of prior orders within a first time period, wherein each of the plurality of prior orders corresponds to one of prior transactions associated with the terminal (130-1, 130-2...);
for each of the plurality of prior orders, determine a time difference between the broadcasting time of the prior order and the current time, wherein the broadcasting time is the time when the order is accepted by the terminal associated with the vehicle;
determine a prior order corresponding to a smallest time difference among the plurality of time differences as a first prior order, which corresponds to a first prior transaction;
determine an estimated end time of the first prior transaction based on the record of the first prior order;
determine the load status of the vehicle based on a current time and the estimated end time of the first prior transaction;
wherein to determine the load status of the vehicle, the processor is further directed to:
determine a confidence value of the estimated end time based on the estimated end time and the current time;
determine whether the confidence value is less than a threshold; and
when the confidence value is less than the threshold, determine the load status of the vehicle (160-1, 160-2...) based on a plurality of locations of the terminal (130-1, 130-2...) and a plurality of locations of prior user equipment (150-1, 150-2...) associated with the first prior order within a second time period,
wherein the second time period includes a first plurality of time points and a
second Plurality of time points, each of the plurality of locations of the terminal is associated with one instance of the first plurality of time points, and each of the plurality of locations of the prior user equipment (150-1, 150-2...) is associated with one instance of the second plurality of time points.

2. The system of claim 1, wherein the processor (210) is further directed to:
determine the vehicle (160-1, 160-2...) is unavailable to accept an order
when the confidence value is equal or greater than the threshold and when the estimated end time is later than the current time.

3. The system of claim 1, wherein the processor (210) is further directed to:
obtain the plurality of locations of the terminal (130-1, 130-2...);
obtain map data of a geographical area encompassing the plurality of locations;
determine one or more features of the vehicle (130-1, 130-2...) based on the plurality of locations of the terminal and the map data; and
determine the load status of the vehicle (160-1, 160-2...) based on the features of the vehicle (130-1, 130-2...) by using a neural networkmodel.

4. The system of claim 1, wherein the processor (210) is further directed to:
obtain the plurality of locations of the terminal (130-1, 130-2...);
obtain the plurality of locations of the prior user equipment (150-1, 150- 2...);
compare the plurality of locations of the terminal (130-1, 130-2...) with the plurality of locations of the prior user equipment (150-1, 150-2...) to determine a distance between the terminal (130-1, 130-2...) and the prior user equipment (150-1, 150-2...); and
determine the load status of the vehicle (160-1, 160-2...) based on the distance between the terminal (130-1, 130-2...) and the prior user equipment (150-1, 150-2...).

5. The system of claim 4, wherein to determine the load status of the vehicle (160-1, 160-2...), the processor (210) is directed to:
obtain a reference location of the terminal (130-1, 130-2...) from the plurality of locations of the terminal (130-1, 130-2...) associated with a first instance among the first set of instances within the second time period;
obtain a reference location of the prior user equipment (150-1, 150-2...) from the plurality of locations of the prior user equipment (150-1, 150-2...) associated with a second instance among the second set of instances within the second time period, wherein a difference between the first instance and the second instance is smaller than a predetermined time interval; and
determine a distance between the reference location of the terminal (150-1, 130-2...) and the reference location of the prior user equipment;
determine whether the distance between the reference location of the terminal (130-1, 130-2...) and the reference location of the prior user equipment (150-1, 150-2...) is less than a predetermined distance; and
when the distance between the reference location of terminal (130-1, 130-2...) and the reference location of the prior user equipment (150-1, 150-2...) is less than the predetermined distance, determine the vehicle (160-1, 160- 2...) is in an unavailable state to accept the order.

6. The system of claim 1, wherein the storage medium (220) further stores a second set of instructions for broadcasting a current order, wherein when the processor (210) executes the second set of instructions, the processor (210) is further directed to:
receive an order from a current user equipment (150-1, 150-2...) located at a target location;
identify a plurality of candidate terminals (130-1, 130-2...) within a range around the target location; wherein each of the plurality of candidate terminals (130-1, 130-2...) corresponds to a candidate vehicle (160-1, 160- 2...);
for the plurality of candidate terminals (130-1, 130-2...), execute the first set of instructions to determine the load status of each of the candidate vehicles(160-1, 160-2...), wherein the load status of each of the candidate vehicles (160-1,160-2...) indicates whether each of the candidate vehicles (160-1, 160-2...) is available to accept the order;
select, based on the load status of each of the candidate vehicles (160-1, 160-2...), from the plurality of the candidate terminals (130-1, 130-2...) at least one target terminal (130-1, 130-2...) associated with one of the candidate vehicles (160-1, 160-2...) that is available to accept the order; and
broadcast the order to the at least one selected target terminal (130-1, 130- 2...).

7. A method for determining a load status of a vehicle (160-1, 160-2...), implemented on an electronic device (110; 200) having a processor (210) and a storage medium (220), the method comprising:
establishing, by the electronic device (110; 200), a communication between a terminal (130-1, 130-2...) associated with a vehicle (160-1, 160-2...) and processor (210) of the electronic device (110; 200);
obtaining, by the electronic device (110;200), records of a plurality of prior orders within a first time period, wherein each of the plurality of prior orders corresponds to one of prior transactions associated with the terminal (130-1, 130-2...);
for each of the plurality of prior orders, determining, by the electronic device (110; 200), a time difference between the broadcasting time of the prior order and the current time, wherein the broadcasting time is the time when the order is accepted by the terminal associated with the vehicle;
determining, by the electronic device (110; 200), a prior order corresponding to a smallest time difference among the plurality of time differences as a first prior order, which corresponds to a first prior transaction;
determining an estimated end time of the first prior transaction by the electronic device;
determining the load status of the vehicle based on a current time and the estimated end time of the first prior transaction by the electronic device;
wherein determining the load status of the vehicle further comprises: determin
ing, by the electronic device (110; 200), a confidence value of the estimated end time based on the estimated end time and the current time;
determining whether the confidence value is less than a threshold; and
when the confidence value is less than the threshold, determining the load status of the vehicle (160-1, 160-2...) based on a plurality of locations of the terminal (130-1, 130-2...) and a plurality of locations of prior user equipment (150-1, 150-2...) associated with the first prior order within a second time period,
wherein the second time period includes a first plurality of time points and a second plurality of time points, each of the plurality of locations of the terminal is associated with one instance of the first plurality of time points, and each of the plurality of locations of the prior user equipment (150-1, 150-2...) is associated with one instance of the second plurality of time points.

8. The method of claim 7, further including:
determining the vehicle (160-1, 160-2...) is unavailable to accept an order by the electronic device when the confidence value is equal or greater than the threshold and when the estimated end time is later than the current time.

9. The method of claim 7, further comprising:
obtaining the plurality of locations of the terminal (130-1, 130-2...) by the electronic device (110; 200);
obtaining map data of a geographical area encompassing the plurality of locations by the electronic device (110; 200);
determining one or more features of the vehicle (160-1, 160-2...) based on the plurality of locations of the terminal (130-1, 130-2...) and the map data by the electronic device (110; 200); and
determining the load status of the vehicle (160-1, 160-2...) based on the features of the vehicle (160-1, 160-2...) by using a neural network model by the electronic device (110; 200).

10. The method of claim 7, further comprising:
obtaining the plurality of locations of the terminal (130-1, 130-2...) by the electronic device (110; 200);
obtaining the plurality of locations of the prior userequipment (150-1, 150-2...) by the electronic device (110; 200);
comparing the plurality of locations of the terminal (130-1, 130-2...) with the plurality of locations of the prior user equipment (150-1, 150-2...) to determine a distance between the terminal (130-1, 130-2...) and the prior user equipment (150-1, 150-2...) by the electronic device (110; 200); and
determining the load status of the vehicle (160-1, 160-2...) based on the distance between the terminal (130-1, 130-2...) and the prior user equipment (150-1, 150-2...) by the electronic device (110; 200).

11. The method of claim 10, wherein determining the load status of the vehicle (160-1, 160-2...) includes:
obtaining, by the electronic device (110; 200), a reference location of the terminal (130-1, 130-2...) from the plurality of locations of the terminal (130-1, 130-2...) associated with a first instance among the first set of instances within the second time period;
obtaining, by the electronic device (110; 200), a reference location of the prior user equipment (150-1, 150-2...) from the plurality of locations of the prior user equipment (150-1, 150-2...) associated with a second instance among the second set of instances within the second time period, wherein a difference between the first instance and the second instance is smaller thana predetermined time interval; and
determining a distance between the reference location of the terminal (130-1, 130-2...) and the reference location of the prior user equipment (150-1,150-2...) by the electronic device (110; 200);
determining, by the electronic device (110; 200), whether the distance between the reference location of the terminal (130-1, 130-2...) and the reference location of the prior user equipment (150-1, 150-2...) is less than a predetermined distance; and
when the distance between the reference location of terminal (130-1, 130-2...) and the reference location of the prior user equipment (150-1, 150- 2...)is less than the predetermined distance, determining the vehicle (160-1, 160-2...) is unavailable to accept the order by the electronic device (110; 200).

12. The method of claim 7, further comprising:
receiving, by the electronic device (110; 200), an order from acurrent user equipment (150-1, 150-2...) located at a target location;
identifying, by the electronic device (110; 200), a plurality of candidate terminals (130-1, 130-2...) within a range around the target location; wherein each of the candidate terminals (130-1, 130-2...) corresponds to a candidate vehicle (160-1, 160-2...);
for the plurality of candidate terminals (130-1,130-2...),
determining, by the electronic device (110; 200), the load status of each of the candidate vehicles (160-1, 160-2...), wherein the load status of each of the candidate vehicles (160-1, 160-2...) indicates whether each of the candidate vehicles (160-1, 160-2...) is available to accept the order;
selecting, based on the load status of each of the candidate vehicles (160-1, 160-2...), from the plurality of the candidate terminals (130-1, 130-2...) at least one target terminal (130-1, 130-2...) associated with one of thecandidatevehicles (160-1, 160-2...) that is available to accept the order; and broadcasting the order to the at least one selected target terminal (130-1, 130- 2...) by the electronic device (110; 200).

13. A computer-readable storage medium (220) including a first set of instructions for determining a load status of a vehicle (160-1, 160-2...), the instructions being arranged such that when executed on a computer, the computer is caused to:
establish a communication with a terminal (130-1, 130-2...) associated with the vehicle;
obtain records of a plurality of prior orders within a first time period, wherein each of the plurality of prior orders corresponds to one of prior transactions associated with the terminal (130-1, 130-2...);
for each of the plurality of prior orders, determine a time difference between the broadcasting time of the prior order and the current time, wherein the broadcasting time is the time when the order is accepted by the terminal associated with the vehicle;
determine a prior order corresponding to a smallest time difference among the plurality of time differences as a first prior order, which corresponds to a first prior transaction;
determine an estimated end time of the first prior transaction based on the record of the first prior order;
determine the load status of the vehicle based on a current time and the estimated end time of the first prior transaction;
wherein to determine the load status of the vehicle, the computer is further caused to:
determine a confidence value of the estimated end time based on the estimated end time and the current time;
determine whether the confidence value is less than a threshold; and
when the confidence value is less than the threshold, determine the load status of the vehicle (160-1, 160-2...) based on a plurality of locations of the terminal (130-1, 130-2...) and a plurality of locations of prior user equipment (150-1, 150-2...) associated with the first prior order within a second time period,
wherein the second time period includes a first plurality of time points and a second plurality of time points, each of the plurality of locations of the terminal is associated with one instance of the first plurality of time points, and each of the plurality of locations of the prior user equipment (150-1, 150-2...) is associated with one instance of the second plurality of time points.

14. The computer-readable storage medium of claim 13, wherein the computer is further caused to:
determine the vehicle (160-1, 160-2...) is unavailable to accept an order when the confidence value is equal or greater than the threshold and when the estimated end time is later than the current time.

15. The computer-readable storage medium of claim 13, wherein the computer is further caused to:
obtain the plurality of locations of the terminal (130-1,130-2...);
obtain map data of a geographical area encompassing the plurality of locations;
determine one or more features of the vehicle (130-1, 130-2...) based on the plurality of locations of the terminal and the map data; and
determine the load status of the vehicle (160-1, 160-2...) based on the features of the vehicle (130-1, 130-2...) by using a neural networkmodel.

## Patentansprüche

1. System, das umfasst:
ein computerlesbares Speichermedium (220), das einen ersten Satz von Anweisungen zum Bestimmen eines Beladungszustands eines Fahrzeugs (160-1, 160-2...) umfasst; und einen Prozessor (210) in Verbindung mit dem computerlesbaren Speichermedium, wobei bei Ausführung des ersten Satzes von Anweisungen der Prozessor auf Folgendes gerichtet ist:
Herstellen einer Verbindung mit einem mit dem Fahrzeug assoziierten Endgerät (130-1, 130-2...);
Abrufen von Aufzeichnungen einer Mehrzahl von früheren Aufträgen innerhalb einer ersten Zeitdauer, wobei jeder der Mehrzahl von früheren Aufträgen einer von mit dem Endgerät (130-1, 130-2...) assoziierten früheren Transaktionen entspricht;
für jeden der Mehrzahl von früheren Aufträgen, Bestimmen einer Zeitdifferenz zwischen der Rundsendezeit des früheren Auftrags und der aktuellen Zeit, wobei die Rundsendezeit die Zeit ist, wann der Auftrag durch das mit dem Fahrzeug assoziierte Endgerät angenommen wird;
Bestimmen eines früheren Auftrags, der einer kleinsten Zeitdifferenz in der Mehrzahl von Zeitdifferenzen entspricht, als einen ersten früheren Auftrag, der einer ersten früheren Transaktion entspricht;
Bestimmen einer geschätzten Endzeit der ersten früheren Transaktion basierend auf der Aufzeichnung des ersten früheren Auftrags;
Bestimmen des Beladungszustands des Fahrzeugs basierend auf einer aktuellen Zeit und der geschätzten Endzeit der ersten früheren Transaktion;
wobei zum Bestimmen des Beladungszustands des Fahrzeugs der Prozessor ferner auf Folgendes gerichtet ist:
Bestimmen eines Konfidenzwerts der geschätzten Endzeit basierend auf der geschätzten Endzeit und der aktuellen Zeit;
Bestimmen, ob der Konfidenzwert kleiner als ein Schwellenwert ist; und
wenn der Konfidenzwert kleiner als der Schwellenwert ist, Bestimmen des Beladungszustands des Fahrzeugs (160-1, 160-2...) basierend auf einer Mehrzahl von Positionen des Endgeräts (130-1, 130-2...) und einer Mehrzahl von Positionen einer früheren Benutzereinrichtung (150-1, 150-2...), die mit dem ersten früheren Auftrag assoziiert ist, innerhalb einer zweiten Zeitdauer,
wobei die zweite Zeitdauer eine erste Mehrzahl von Zeitpunkten und eine zweite Mehrzahl von Zeitpunkten umfasst, wobei jede der Mehrzahl von Positionen des Endgeräts mit einer Instanz der ersten Mehrzahl von Zeitpunkten assoziiert ist, und jede der Mehrzahl von Positionen der früheren Benutzereinrichtung (150-1, 150-2...) mit einer Instanz der zweiten Mehrzahl von Zeitpunkten assoziiert ist.

2. System nach Anspruch 1, wobei der Prozessor (210) ferner auf Folgendes gerichtet ist:
Bestimmen, dass das Fahrzeug (160-1, 160-2...) zum Annehmen eines Auftrags nicht verfügbar ist, wenn der Konfidenzwert gleich dem oder größer als der Schwellenwert ist und wenn die geschätzte Endzeit später als die aktuelle Zeit ist.

3. System nach Anspruch 1, wobei der Prozessor (210) ferner auf Folgendes gerichtet ist:
Abrufen der Mehrzahl von Positionen des Endgeräts (130-1, 130-2...);
Abrufen von Kartendaten eines geographischen Bereichs, der die Mehrzahl von Positionen einschließt;
Bestimmen eines oder mehrerer Merkmale des Fahrzeugs (130-1, 130-2...) basierend auf der Mehrzahl von Positionen des Endgeräts und den Kartendaten; und
Bestimmen des Beladungszustands des Fahrzeugs (160-1, 160-2...) basierend auf den Merkmalen des Fahrzeugs (130-1, 130-2...) unter Verwendung eines neuronalen Netzwerkmodells.

4. System nach Anspruch 1, wobei der Prozessor (210) ferner auf Folgendes gerichtet ist:
Abrufen der Mehrzahl von Positionen des Endgeräts (130-1, 130-2...);
Abrufen der Mehrzahl von Positionen der früheren Benutzereinrichtung (150-1, 150-2...);
Vergleichen der Mehrzahl von Positionen des Endgeräts (130-1, 130-2...) mit der Mehrzahl von Positionen der früheren Benutzereinrichtung (150-1, 150-2...), um eine Distanz zwischen dem Endgerät (130-1, 130-2...) und der früheren Benutzereinrichtung (150-1, 150-2...) zu bestimmen; und
Bestimmen des Beladungszustands des Fahrzeugs (160-1, 160-2...) basierend auf der Distanz zwischen dem Endgerät (130-1, 130-2...) und der früheren Benutzereinrichtung (150-1, 150-2...).

5. System nach Anspruch 4, wobei zum Bestimmen des Beladungszustands des Fahrzeugs (160-1, 160-2...) der Prozessor (210) auf Folgendes gerichtet ist:
Abrufen einer Referenzposition des Endgeräts (130-1, 130-2...) aus der Mehrzahl von Positionen des Endgeräts (130-1, 130-2...), die mit einer ersten Instanz in dem ersten Satz von Instanzen innerhalb der zweiten Zeitdauer assoziiert sind;
Abrufen einer Referenzposition der früheren Benutzereinrichtung (150-1, 150-2...) aus der Mehrzahl von Positionen der früheren Benutzereinrichtung (150-1, 150-2...), die mit einer zweiten Instanz in dem zweiten Satz von Instanzen innerhalb der zweiten Zeitdauer assoziiert sind, wobei eine Differenz zwischen der ersten Instanz und der zweiten Instanz kleiner als ein vorbestimmtes Zeitintervall ist; und
Bestimmen einer Distanz zwischen der Referenzposition des Endgeräts (150-1, 130-2...) und der Referenzposition der früheren Benutzereinrichtung;
Bestimmen, ob die Distanz zwischen der Referenzposition des Endgeräts (130-1, 130-2...) und der Referenzposition der früheren Benutzereinrichtung (150-1, 150-2...) kleiner als eine vorbestimmte Distanz ist; und
wenn die Distanz zwischen der Referenzposition des Endgeräts (130-1, 130-2...) und der Referenzposition der früheren Benutzereinrichtung (150-1, 150-2...) kleiner als eine vorbestimmte Distanz ist, Bestimmen, dass das Fahrzeug (160-1, 160-2...) in einem zum Annehmen des Auftrags nicht verfügbaren Zustand ist.

6. System nach Anspruch 1, wobei das Speichermedium (220) ferner einen zweiten Satz von Anweisungen zum Rundsenden eines aktuellen Auftrags speichert, wobei, wenn der Prozessor (210) den zweiten Satz von Anweisungen ausführt, der Prozessor (210) ferner auf Folgendes gerichtet ist:
Empfangen eines Auftrags von einer aktuellen Benutzereinrichtung (150-1, 150-2...), die sich an einer Zielposition befindet;
Identifizieren einer Mehrzahl von Kandidaten-Endgeräten (130-1, 130-2...) innerhalb eines Bereichs um die Zielposition; wobei jedes der Mehrzahl von Kandidaten-Endgeräten (130-1, 130-2...) einem Kandidaten-Fahrzeug (160-1, 160-2...) entspricht;
für die Mehrzahl von Kandidaten-Endgeräten (130-1, 130-2...), Ausführen des ersten Satzes von Anweisungen zum Bestimmen des Beladungszustands jedes der Kandidaten-Fahrzeuge (160-1, 160-2...), wobei der Beladungszustand jedes der Kandidaten-Fahrzeuge (160-1, 160-2...) anzeigt, ob jedes der Kandidaten-Fahrzeuge (160-1, 160-2...) zum Annehmen des Auftrags verfügbar ist;
Auswählen, basierend auf dem Beladungszustand jedes der Kandidaten-Fahrzeuge (160-1, 160-2...), aus der Mehrzahl von Kandidaten-Endgeräten (130-1, 130-2...) mindestens eines Ziel-Endgeräts (130-1, 130-2...), das mit einem der Kandidaten-Fahrzeuge (160-1, 160-2...) assoziiert ist, das zum Annehmen des Auftrags verfügbar ist; und
Rundsenden des Auftrags an das mindestens eine ausgewählte Ziel-Endgerät (130-1, 130-2...).

7. Verfahren zum Bestimmen eines Beladungszustands eines Fahrzeugs (160-1, 160-2...), das auf einer elektronischen Vorrichtung (110; 200) mit einem Prozessor (210) und einem Speichermedium (220) implementiert wird, wobei das Verfahren umfasst:
Herstellen, durch die elektronische Vorrichtung (110; 200), einer Verbindung zwischen einem Endgerät (130-1, 130-2...), das mit einem Fahrzeug (160-1, 160-2...) assoziiert ist, und einem Prozessor (210) der elektronischen Vorrichtung (110; 200);
Abrufen, durch die elektronische Vorrichtung (110; 200), von Aufzeichnungen einer Mehrzahl von früheren Aufträgen innerhalb einer ersten Zeitdauer, wobei jeder der Mehrzahl von früheren Aufträgen einer von mit dem Endgerät (130-1, 130-2...) assoziierten früheren Transaktionen entspricht;
für jeden der Mehrzahl von früheren Aufträgen, Bestimmen, durch die elektronische Vorrichtung (110; 200), einer Zeitdifferenz zwischen einer Rundsendezeit des früheren Auftrags und der aktuellen Zeit, wobei die Rundsendezeit die Zeit ist, wann der Auftrag durch das mit dem Fahrzeug assoziierte Endgerät angenommen wird;
Bestimmen, durch die elektronische Vorrichtung (110; 200), eines früheren Auftrags, der einer kleinsten Zeitdifferenz in der Mehrzahl von Zeitdifferenzen entspricht, als einen ersten früheren Auftrag, der einer ersten früheren Transaktion entspricht;
Bestimmen einer geschätzten Endzeit der ersten früheren Transaktion durch die elektronische Vorrichtung;
Bestimmen des Beladungszustands des Fahrzeugs basierend auf einer aktuellen Zeit und der geschätzten Endzeit der ersten früheren Transaktion durch die elektronische Vorrichtung;
wobei das Bestimmen des Beladungszustands des Fahrzeugs ferner umfasst:
Bestimmen, durch die elektronische Vorrichtung (110; 200), eines Konfidenzwerts der geschätzten Endzeit basierend auf der geschätzten Endzeit und der aktuellen Zeit;
Bestimmen, ob der Konfidenzwert kleiner als ein Schwellenwert ist; und
wenn der Konfidenzwert kleiner als der Schwellenwert ist, Bestimmen des Beladungszustands des Fahrzeugs (160-1, 160-2...) basierend auf einer Mehrzahl von Positionen des Endgeräts (130-1, 130-2...) und einer Mehrzahl von Positionen einer früheren Benutzereinrichtung (150-1, 150-2...), die mit dem ersten früheren Auftrag assoziiert ist, innerhalb einer zweiten Zeitdauer,
wobei die zweite Zeitdauer eine erste Mehrzahl von Zeitpunkten und eine zweite Mehrzahl von Zeitpunkten umfasst, wobei jede der Mehrzahl von Positionen des Endgeräts mit einer Instanz der ersten Mehrzahl von Zeitpunkten assoziiert ist, und jede der Mehrzahl von Positionen der früheren Benutzereinrichtung (150-1, 150-2...) mit einer Instanz der zweiten Mehrzahl von Zeitpunkten assoziiert ist.

8. Verfahren nach Anspruch 7, das ferner umfasst:
Bestimmen, dass das Fahrzeug (160-1, 160-2...) zum Annehmen eines Auftrags nicht verfügbar ist, durch die elektronische Vorrichtung, wenn der Konfidenzwert gleich dem oder größer als der Schwellenwert ist und wenn die geschätzte Endzeit später als die aktuelle Zeit ist.

9. Verfahren nach Anspruch 7, das ferner umfasst:
Abrufen der Mehrzahl von Positionen des Endgeräts (130-1, 130-2...) durch die elektronische Vorrichtung (110; 200) ;
Abrufen von Kartendaten eines geographischen Bereichs, der die Mehrzahl von Positionen einschließt, durch die elektronische Vorrichtung (110; 200);
Bestimmen eines oder mehrerer Merkmale des Fahrzeugs (160-1, 160-2...) basierend auf der Mehrzahl von Positionen des Endgeräts (130-1, 130-2...) und den Kartendaten durch die elektronische Vorrichtung (110; 200); und
Bestimmen des Beladungszustands des Fahrzeugs (160-1, 160-2...) basierend auf den Merkmalen des Fahrzeugs (160-1, 160-2...) unter Verwendung eines neuronalen Netzwerkmodells durch die elektronische Vorrichtung (110; 200) .

10. Verfahren nach Anspruch 7, das ferner umfasst:
Abrufen der Mehrzahl von Positionen des Endgeräts (130-1, 130-2...) durch die elektronische Vorrichtung (110; 200) ;
Abrufen der Mehrzahl von Positionen der früheren Benutzereinrichtung (150-1, 150-2...) durch die elektronische Vorrichtung (110; 200);
Vergleichen der Mehrzahl von Positionen des Endgeräts (130-1, 130-2...) mit der Mehrzahl von Positionen der früheren Benutzereinrichtung (150-1, 150-2...) zum Bestimmen einer Distanz zwischen dem Endgerät (130-1, 130-2...) und der früheren Benutzereinrichtung (150-1, 150-2...) durch die elektronische Vorrichtung (110; 200); und
Bestimmen des Beladungszustands des Fahrzeugs (160-1, 160-2...) basierend auf der Distanz zwischen dem Endgerät (130-1, 130-2...) und der früheren Benutzereinrichtung (150-1, 150-2...) durch die elektronische Vorrichtung (110; 200).

11. Verfahren nach Anspruch 10, wobei das Bestimmen des Beladungszustands des Fahrzeugs (160-1, 160-2...) umfasst:
Abrufen, durch die elektronische Vorrichtung (110; 200), einer Referenzposition des Endgeräts (130-1, 130-2...) aus der Mehrzahl von Positionen des Endgeräts (130-1, 130-2...), die mit einer ersten Instanz in dem ersten Satz von Instanzen innerhalb der zweiten Zeitdauer assoziiert sind;
Abrufen, durch die elektronische Vorrichtung (110; 200), einer Referenzposition der früheren Benutzereinrichtung (150-1, 150-2...) aus der Mehrzahl von Positionen der früheren Benutzereinrichtung (150-1, 150-2...), die mit einer zweiten Instanz in dem zweiten Satz von Instanzen innerhalb der zweiten Zeitdauer assoziiert sind, wobei eine Differenz zwischen der ersten Instanz und der zweiten Instanz kleiner als ein vorbestimmtes Zeitintervall ist; und
Bestimmen einer Distanz zwischen der Referenzposition des Endgeräts (130-1, 130-2...) und der Referenzposition der früheren Benutzereinrichtung (150-1, 150-2...) durch die elektronische Vorrichtung (110; 200);
Bestimmen, durch die elektronische Vorrichtung (110; 200), ob die Distanz zwischen der Referenzposition des Endgeräts (130-1, 130-2...) und der Referenzposition der früheren Benutzereinrichtung (150-1, 150-2...) kleiner als eine vorbestimmte Distanz ist; und
wenn die Distanz zwischen der Referenzposition des Endgeräts (130-1, 130-2...) und der Referenzposition der früheren Benutzereinrichtung (150-1, 150-2...) kleiner als eine vorbestimmte Distanz ist, Bestimmen, dass das Fahrzeug (160-1, 160-2...) zum Annehmen des Auftrags nicht verfügbar ist, durch die elektronische Vorrichtung (110; 200).

12. Verfahren nach Anspruch 7, das ferner umfasst:
Empfangen, durch die elektronische Vorrichtung (110; 200), eines Auftrags von einer aktuellen Benutzereinrichtung (150-1, 150-2...), die sich an einer Zielposition befindet;
Identifizieren, durch die elektronische Vorrichtung (110; 200), einer Mehrzahl von Kandidaten-Endgeräten (130-1, 130-2...) innerhalb eines Bereichs um die Zielposition;
wobei jedes der Kandidaten-Endgeräte (130-1, 130-2...) einem Kandidaten-Fahrzeug (160-1, 160-2...) entspricht; für die Mehrzahl von Kandidaten-Endgeräten (130-1, 130-2...),
Bestimmen, durch die elektronische Vorrichtung (110; 200), des Beladungszustands jedes der Kandidaten-Fahrzeuge (160-1, 160-2...), wobei der Beladungszustand jedes der Kandidaten-Fahrzeuge (160-1, 160-2...) anzeigt, ob jedes der Kandidaten-Fahrzeuge (160-1, 160-2...) zum Annehmen des Auftrags verfügbar ist;
Auswählen, basierend auf dem Beladungszustand jedes der Kandidaten-Fahrzeuge (160-1, 160-2...), aus der Mehrzahl von Kandidaten-Endgeräten (130-1, 130-2...) mindestens eines mit einem der Kandidaten-Fahrzeuge (160-1, 160-2...) assoziierten Ziel-Endgeräts (130-1, 130-2...), das zum Annehmen des Auftrags verfügbar ist; und Rundsenden des Auftrags an das mindestens eine ausgewählte Ziel-Endgerät (130-1, 130-2...) durch die elektronische Vorrichtung (110; 200).

13. Computerlesbares Speichermedium (220), das einen ersten Satz von Anweisungen zum Bestimmen eines Beladungszustands eines Fahrzeugs (160-1, 160-2...) umfasst, wobei die Anweisungen derart angeordnet sind, dass, wenn sie auf einem Computer ausgeführt werden, der Computer zu Folgendem veranlasst wird:
Herstellen einer Verbindung mit einem mit dem Fahrzeug assoziierten Endgerät (130-1, 130-2...);
Abrufen von Aufzeichnungen einer Mehrzahl von früheren Aufträgen innerhalb einer ersten Zeitdauer, wobei jeder der Mehrzahl von früheren Aufträgen einer von mit dem Endgerät (130-1, 130-2...) assoziierten früheren Transaktionen entspricht;
für jeden der Mehrzahl von früheren Aufträgen, Bestimmen einer Zeitdifferenz zwischen der Rundsendezeit des früheren Auftrags und der aktuellen Zeit, wobei die Rundsendezeit die Zeit ist, wann der Auftrag durch dem mit dem Fahrzeug assoziierte Endgerät angenommen wird;
Bestimmen eines früheren Auftrags, der einer kleinsten Zeitdifferenz in der Mehrzahl von Zeitdifferenzen entspricht, als einen ersten früheren Auftrag, der einer ersten früheren Transaktion entspricht;
Bestimmen einer geschätzten Endzeit der ersten früheren Transaktion basierend auf der Aufzeichnung des ersten früheren Auftrags;
Bestimmen des Beladungszustands des Fahrzeugs basierend auf einer aktuellen Zeit und der geschätzten Endzeit der ersten früheren Transaktion;
wobei zum Bestimmen des Beladungszustands des Fahrzeugs der Computer ferner zu Folgendem veranlasst wird:
Bestimmen eines Konfidenzwerts der geschätzten Endzeit basierend auf der geschätzten Endzeit und der aktuellen Zeit;
Bestimmen, ob der Konfidenzwert kleiner als ein Schwellenwert ist; und
wenn der Konfidenzwert kleiner als der Schwellenwert ist, Bestimmen des Beladungszustands des Fahrzeugs (160-1, 160-2...) basierend auf einer Mehrzahl von Positionen des Endgeräts (130-1, 130-2...) und einer Mehrzahl von Positionen einer früheren Benutzereinrichtung (150-1, 150-2...), die mit dem ersten früheren Auftrag assoziiert sind, innerhalb einer zweiten Zeitdauer,
wobei die zweite Zeitdauer eine erste Mehrzahl von Zeitpunkten und eine zweite Mehrzahl von Zeitpunkten umfasst, wobei jede der Mehrzahl von Positionen des Endgeräts mit einer Instanz der ersten Mehrzahl von Zeitpunkten assoziiert ist, und jede der Mehrzahl von Positionen der früheren Benutzereinrichtung (150-1, 150-2...) mit einer Instanz der zweiten Mehrzahl von Zeitpunkten assoziiert ist.

14. Computerlesbares Speichermedium nach Anspruch 13, wobei der Computer ferner zu Folgendem veranlasst wird:
Bestimmen, dass das Fahrzeug (160-1, 160-2...) zum Annehmen eines Auftrags nicht verfügbar ist, wenn der Konfidenzwert gleich dem oder größer als der Schwellenwert ist und wenn die geschätzte Endzeit später als die aktuelle Zeit ist.

15. Computerlesbares Speichermedium nach Anspruch 13, wobei der Computer ferner zu Folgendem veranlasst wird:
Abrufen der Mehrzahl von Positionen des Endgeräts (130-1, 130-2...);
Abrufen von Kartendaten eines geographischen Bereichs, der die Mehrzahl von Positionen einschließt;
Bestimmen eines oder mehrerer Merkmale des Fahrzeugs (130-1, 130-2...) basierend auf der Mehrzahl von Positionen des Endgeräts und den Kartendaten; und
Bestimmen des Beladungszustands des Fahrzeugs (160-1, 160-2...) basierend auf den Merkmalen des Fahrzeugs (130-1, 130-2...) unter Verwendung eines neuronalen Netzwerkmodells.

## Revendications

1. Système, comprenant :
un support de mémorisation lisible par ordinateur (220) comportant un premier ensemble d'instructions pour déterminer un état de charge d'un véhicule (160-1, 160-2...) ; et un processeur (210) en communication avec le support de mémorisation lisible par ordinateur, dans lequel, lors de l'exécution du premier ensemble d'instructions, le processeur doit :
établir une communication avec un terminal (130-1, 130-2...) associé au véhicule ;
obtenir des enregistrements d'une pluralité d'ordres antérieurs dans une première période de temps, chacun de la pluralité d'ordres antérieurs correspondant à une transaction antérieure associée au terminal (130-1, 130-2...) ;
pour chacun de la pluralité d'ordres antérieurs, déterminer une différence de temps entre le temps de diffusion de l'ordre antérieur et le temps actuel, le temps de diffusion étant le temps auquel l'ordre est accepté par le terminal associé au véhicule ;
déterminer un ordre antérieur correspondant à la plus petite différence de temps parmi la pluralité de différences de temps en tant que premier ordre antérieur, lequel correspond à une première transaction antérieure ;
déterminer un temps de fin estimé de la première transaction antérieure en fonction de l'enregistrement du premier ordre antérieur ;
déterminer l'état de charge du véhicule en fonction d'un temps actuel et du temps de fin estimé de la première transaction antérieure ;
dans lequel pour déterminer l'état de charge du véhicule, le processeur doit :
déterminer une valeur de confiance du temps de fin estimé en fonction du temps de fin estimé et du temps actuel ;
déterminer que la valeur de confiance est inférieure ou non à un seuil ; et
quand la valeur de confiance est inférieure au seuil, déterminé l'état de charge du véhicule (160-1, 160-2...) en fonction d'une pluralité d'emplacements du terminal (130-1, 130-2...) et d'une pluralité d'emplacements d'un équipement utilisateur antérieur (150-1, 150-2...) associé au premier ordre antérieur dans une seconde période de temps,
dans lequel la seconde période de temps comporte une première pluralité de points temporels et une seconde pluralité de points temporels, chacun de la pluralité d'emplacements du terminal est associé à une instance de la première pluralité de points temporels, et chacun de la pluralité d'emplacements de l'équipement utilisateur antérieur (150-1, 150-2...) est associé à une instance de la seconde pluralité de points temporels.

2. Système selon la revendication 1, dans lequel le processeur (210) doit en outre :
déterminer que le véhicule (160-1, 160-2...) n'est pas en mesure d'accepter un ordre quand la valeur de confiance est égale ou supérieure au seuil et quand le temps de fin estimé est postérieur au temps actuel.

3. Système selon la revendication 1, dans lequel le processeur (210) doit en outre :
obtenir la pluralité d'emplacements du terminal (130-1, 130-2...) ;
obtenir des données cartographiques d'une zone géographique englobant la pluralité d'emplacements ;
déterminer une ou plusieurs caractéristiques du véhicule (130-1, 130-2...) en fonction de la pluralité d'emplacements du terminal et des données cartographiques ; et
déterminer l'état de charge du véhicule (160-1, 160-2...) en fonction des caractéristiques du véhicule (130-1, 130-2...) à l'aide d'un modèle de réseau de neurones.

4. Système selon la revendication 1, dans lequel le processeur (210) doit en outre :
obtenir la pluralité d'emplacements du terminal (130-1, 130-2...) ;
obtenir la pluralité d'emplacements de l'équipement utilisateur antérieur (150-1, 150-2...) ;
comparer la pluralité d'emplacements du terminal (130-1, 130-2...) à la pluralité d'emplacements de l'équipement utilisateur antérieur (150-1, 150-2...) pour déterminer une distance entre le terminal (130-1, 130-2...) et l'équipement utilisateur antérieur (150-1, 150-2...) ; et
déterminer l'état de charge du véhicule (160-1, 160-2...) en fonction de la distance entre le terminal (130-1, 130-2...) et l'équipement utilisateur antérieur (150-1, 150-2...) .

5. Système selon la revendication 4, dans lequel pour déterminer l'état de charge du véhicule (160-1, 160-2...), le processeur (210) doit :
obtenir un emplacement de référence du terminal (130-1, 130-2...) parmi la pluralité d'emplacements du terminal (130-1, 130-2...) associé à une première instance parmi le premier ensemble d'instances dans la seconde période de temps ;
obtenir un emplacement de référence de l'équipement utilisateur antérieur (150-1, 150-2...) parmi la pluralité d'emplacements de l'équipement utilisateur antérieur (150-1, 150-2...) associé à une seconde instance parmi le second ensemble d'instances dans la seconde période de temps, une différence entre la première instance et la seconde instance étant inférieure à un intervalle de temps prédéterminé ; et
déterminer une distance entre l'emplacement de référence du terminal (150-1, 130-2...) et l'emplacement de référence de l'équipement utilisateur antérieur ;
déterminer que la distance entre l'emplacement de référence du terminal (130-1, 130-2...) et l'emplacement de référence de l'équipement utilisateur antérieur (150-1, 150-2...) est inférieure à une distance prédéterminée ; et
quand la distance entre l'emplacement de référence du terminal (130-1, 130-2...) et l'emplacement de référence de l'équipement utilisateur antérieur (150-1, 150-2...) est inférieure à la distance prédéterminée, déterminé que le véhicule (160-1, 160-2...) est dans un état ne lui permettant pas d'accepter l'ordre.

6. Système selon la revendication 1, dans lequel le support de mémorisation (220) mémorise en outre un second ensemble d'instructions pour diffuser un ordre actuel, dans lequel quand le processeur (210) exécute le second ensemble d'instructions, le processeur (210) doit en outre :
recevoir un ordre à partir d'un équipement utilisateur actuel (150-1, 150-2...) situé à un emplacement cible ;
identifier une pluralité de terminaux candidats (130-1, 130-2...) en-deçà d'une distance autour de l'emplacement cible ; chacun de la pluralité de terminaux candidats (130-1, 130-2...) correspondant à un véhicule candidat (160-1, 160-2...) ;
pour la pluralité de terminaux candidats (130-1, 130-2...), exécuter le premier ensemble d'instructions pour déterminer l'état de charge de chacun des véhicules candidats (160-1, 160-2...), l'état de charge de chacun des véhicules candidats (160-1, 160-2...) indiquant que chacun des véhicules candidats (160-1, 160-2...) est ou non en mesure d'accepter l'ordre ;
sélectionner, en fonction de l'état de charge de chacun des véhicules candidats (160-1, 160-2...), parmi la pluralité de terminaux candidats (130-1, 130-2...) au moins un terminal cible (130-1, 130-2...) associé à un des véhicules candidats (160-1, 160-2...) qui est en mesure d'accepter l'ordre ; et
diffuser l'ordre à l'au moins un terminal cible sélectionné (130-1, 130-2...) .

7. Procédé de détermination d'un état de charge d'un véhicule (160-1, 160-2...) mis en œuvre sur un dispositif électronique (110 ; 200) doté d'un processeur (210) et d'un support de mémorisation (220), le procédé comprenant :
l'établissement, par le dispositif électronique (110 ; 200), d'une communication entre un terminal (130-1, 130-2...) associé à un véhicule (160-1, 160-2...) et le processeur (210) du dispositif électronique (110 ; 200) ; l'obtention, par le dispositif électronique (110 ; 200), d'enregistrements d'une pluralité d'ordres antérieurs dans une première période de temps, chacun de la pluralité d'ordres antérieurs correspondant à une transaction antérieure associée au terminal (130-1, 130-2...) ;
pour chacun de la pluralité d'ordres antérieurs, la détermination, par le dispositif électronique (110 ; 200), d'une différence de temps entre le temps de diffusion de l'ordre antérieur et le temps actuel, le temps de diffusion étant le temps auquel l'ordre est accepté par le terminal associé au véhicule ;
la détermination, par le dispositif électronique (110 ; 200), d'un ordre antérieur correspondant à la plus petite différence de temps parmi la pluralité de différences de temps en tant que premier ordre antérieur, lequel correspond à une première transaction antérieure ;
la détermination d'un temps de fin estimé de la première transaction antérieure par le dispositif électronique ; la détermination de l'état de charge du véhicule en fonction d'un temps actuel et du temps de fin estimé de la première transaction antérieure par le dispositif électronique ;
dans lequel la détermination de l'état de charge du véhicule comprend en outre :
la détermination, par le dispositif électronique (110 ; 200), d'une valeur de confiance du temps de fin estimé en fonction du temps de fin estimé et du temps actuel ; la détermination que la valeur de confiance est inférieure ou non à un seuil ; et
quand la valeur de confiance est inférieure au seuil, la détermination de l'état de charge du véhicule (160-1, 160-2...) en fonction d'une pluralité d'emplacements du terminal (130-1, 130-2...) et d'une pluralité d'emplacements d'un équipement utilisateur antérieur (150-1, 150-2...) associé au premier ordre antérieur dans une seconde période de temps,
dans lequel la seconde période de temps comporte une première pluralité de points temporels et une seconde pluralité de points temporels, chacun de la pluralité d'emplacements du terminal est associé à une instance de la première pluralité de points temporels, et chacun de la pluralité d'emplacements de l'équipement utilisateur antérieur (150-1, 150-2...) est associé à une instance de la seconde pluralité de points temporels.

8. Procédé selon la revendication 7, comportant en outre :
la détermination que le véhicule (160-1, 160-2...) n'est pas en mesure d'accepter un ordre par le dispositif électronique quand la valeur de confiance est égale ou supérieure au seuil et quand le temps de fin estimé est postérieur au temps actuel.

9. Procédé selon la revendication 7, comprenant en outre :
l'obtention de la pluralité d'emplacements du terminal (130-1, 130-2...) par le dispositif électronique (110 ; 200) ;
l'obtention de données cartographiques d'une zone géographique englobant la pluralité d'emplacements par le dispositif électronique (110 ; 200) ;
la détermination d'une ou plusieurs caractéristiques du véhicule (160-1, 160-2...) en fonction de la pluralité d'emplacements du terminal (130-1, 130-2...) et des données cartographiques par le dispositif électronique (110 ; 200) ; et
la détermination de l'état de charge du véhicule (160-1, 160-2...) en fonction des caractéristiques du véhicule (160-1, 160-2...) à l'aide d'un modèle de réseau de neurones par le dispositif électronique (110 ; 200).

10. Procédé selon la revendication 7, comprenant en outre :
l'obtention de la pluralité d'emplacements du terminal (130-1, 130-2...) par le dispositif électronique (110 ; 200) ;
l'obtention de la pluralité d'emplacements de l'équipement utilisateur antérieur (150-1,150-2...) par le dispositif électronique (110 ; 200) ;
la comparaison de la pluralité d'emplacements du terminal (130-1, 130-2...) à la pluralité d'emplacements de l'équipement utilisateur antérieur (150-1, 150-2...) pour déterminer une distance entre le terminal (130-1, 130-2...) et l'équipement utilisateur antérieur (150-1, 150-2...) par le dispositif électronique (110 ; 200) ; et
la détermination de l'état de charge du véhicule (160-1, 160-2...) en fonction de la distance entre le terminal (130-1, 130-2...) et l'équipement utilisateur antérieur (150-1, 150-2...) par le dispositif électronique (110 ; 200) .

11. Procédé selon la revendication 10, dans lequel la détermination de l'état de charge du véhicule (160-1, 160-2...) comporte :
l'obtention, par le dispositif électronique (110 ; 200), d'un emplacement de référence du terminal (130-1, 130-2...) parmi la pluralité d'emplacements du terminal (130-1, 130-2...) associé à une première instance parmi le premier ensemble d'instances dans la seconde période de temps ;
l'obtention, par le dispositif électronique (110 ; 200), d'un emplacement de référence de l'équipement utilisateur antérieur (150-1, 150-2...) parmi la pluralité d'emplacements de l'équipement utilisateur antérieur (150-1, 150-2...) associé à une seconde instance parmi le second ensemble d'instances dans la seconde période de temps, une différence entre la première instance et la seconde instance étant inférieure à un intervalle de temps prédéterminé ; et
la détermination d'une distance entre l'emplacement de référence du terminal (130-1, 130-2...) et l'emplacement de référence de l'équipement utilisateur antérieur (150-1, 150-2...) par le dispositif électronique (110 ; 200) ; la détermination, par le dispositif électronique (110 ; 200), que la distance entre l'emplacement de référence du terminal (130-1, 130-2...) et l'emplacement de référence de l'équipement utilisateur antérieur (150-1, 150-2...) est inférieure ou non à une distance prédéterminée ; et
quand la distance entre l'emplacement de référence du terminal (130-1, 130-2...) et l'emplacement de référence de l'équipement utilisateur antérieur (150-1, 150-2...) est inférieure à la distance prédéterminée, la détermination que le véhicule (160-1, 160-2...) n'est pas en mesure d'accepter l'ordre par le dispositif électronique (110 ; 200) .

12. Procédé selon la revendication 7, comprenant en outre :
la réception, par le dispositif électronique (110 ; 200), d'un ordre à partir d'un équipement utilisateur actuel (150-1, 150-2...) situé à un emplacement cible ;
l'identification, par le dispositif électronique (110 ; 200), d'une pluralité de terminaux candidats (130-1, 130-2...) en-deçà d'une distance autour de l'emplacement cible ; chacun des terminaux candidats (130-1, 130-2...) correspondant à un véhicule candidat (160-1, 160-2...) ; pour la pluralité de terminaux candidats (130-1, 130-2...) la détermination, par le dispositif électronique (110 ; 200), de l'état de charge de chacun des véhicules candidats (160-1, 160-2...), l'état de charge de chacun des véhicules candidats (160-1, 160-2...) indiquant que chacun des véhicules candidats (160-1, 160-2...) est ou non en mesure d'accepter l'ordre ;
la sélection, en fonction de l'état de charge de chacun des véhicules candidats (160-1, 160-2...), parmi la pluralité des terminaux candidats (130-1, 130-2...) d'au moins un terminal candidat (130-1, 130-2...) associé à un des véhicules candidats (160-1, 160-2...) qui est en mesure d'accepter l'ordre ; et
la diffusion de l'ordre à l'au moins un terminal cible sélectionné (130-1, 130-2...) par le dispositif électronique (110 ; 200).

13. Support de mémorisation lisible par ordinateur (220) comportant un premier ensemble d'instructions pour la détermination d'un état de charge d'un véhicule (160-1, 160-2...), les instructions étant conçues de telle sorte qu'à leur exécution sur un ordinateur, l'ordinateur soit amené à :
établir une communication avec un terminal (130-1, 130-2...) associé au véhicule ;
obtenir des enregistrements d'une pluralité d'ordres antérieurs dans une première période de temps, chacun de la pluralité d'ordres antérieurs correspondant à une transaction antérieure associée au terminal (130-1, 130-2...) ;
pour chacun de la pluralité d'ordres antérieurs, déterminer une différence de temps entre le temps de diffusion de l'ordre antérieur et le temps actuel, le temps de diffusion étant le temps auquel l'ordre est accepté par le terminal associé au véhicule ;
déterminer un ordre antérieur correspondant à la plus petite différence de temps parmi la pluralité de différences de temps en tant que premier ordre antérieur, lequel correspond à une première transaction antérieure ;
déterminer un temps de fin estimé de la première transaction antérieure en fonction de l'enregistrement du premier ordre antérieur ;
déterminer l'état de charge du véhicule en fonction d'un temps actuel et du temps de fin estimé de la première transaction antérieure ;
dans lequel pour déterminer l'état de charge du véhicule, l'ordinateur est amené en outre à :
déterminer une valeur de confiance du temps de fin estimé en fonction du temps de fin estimé et du temps actuel ;
déterminer que la valeur de confiance est inférieure ou non à un seuil ; et
quand la valeur de confiance est inférieure au seuil, déterminer l'état de charge du véhicule (160-1, 160-2...) en fonction d'une pluralité d'emplacements du terminal (130-1, 130-2...) et d'une pluralité d'emplacements d'un équipement utilisateur antérieur (150-1, 150-2...) associé au premier ordre antérieur dans une seconde période de temps,
dans lequel la seconde période de temps comporte une première pluralité de points temporels et une seconde pluralité de points temporels, chacun de la pluralité d'emplacements du terminal est associé à une instance de la première pluralité de points temporels, et chacun de la pluralité d'emplacements de l'équipement utilisateur antérieur (150-1, 150-2...) est associé à une instance de la seconde pluralité de points temporels.

14. Support de mémorisation lisible par ordinateur indication 13, dans lequel l'ordinateur est amené en outre à :
déterminer que le véhicule (160-1, 160-2...) n'est pas en mesure d'accepter un ordre quand la valeur de confiance est égale ou supérieure au seuil et quand le temps de fin estimé est postérieur au temps actuel.

15. Support de mémorisation lisible par ordinateur selon la revendication 13, dans lequel l'ordinateur est amené en outre à :
obtenir la pluralité d'emplacements du terminal (130-1, 130-2...) ;
obtenir des données cartographiques d'une zone géographique englobant la pluralité d'emplacements ;
déterminer une ou plusieurs caractéristiques du véhicule (130-1, 130-2...) en fonction de la pluralité d'emplacements du terminal et des données cartographiques des ; et
déterminer l'état de charge du véhicule (160-1, 160-2...) en fonction des caractéristiques du véhicule (130-1, 130-2...) à l'aide d'un modèle de réseau de neurones.
